# EUROPEAN PATENT APPLICATION

(11) **EP 2 211 584 A2**
(43) Date of publication of application: **28.07.2010**
(21) Application number: 10000593.3
(22) Date of filing: 21.01.2010
(51) Int. Cl.: H04W 72/08

(54) **Wireless resource allocation depending on interference and position of the mobile terminal**

(30) Priority: 21.01.2009 JP 2009010495
(71) Applicant: Hitachi, Ltd., Chiyoda-ku Tokyo 100-8280 (JP)
(72) Inventor: Katayama, Rintaro, Tokyo 100-8220 (JP); Takeuchi, Keisuke, Tokyo 100-8220 (JP); Yamamoto, Tomonori, Tokyo 100-8220 (JP); Uwano, Koki, Tokyo 100-8220 (JP)
(74) Representative: Strehl Schübel-Hopf & Partner

(57) **Abstract**

In a conventional OFDMA/SCFDMA communication scheme, frequency resource assignment information is exchanged between BSs via a wired interface and used for control of inter-cell interference or the like. When a BS performs assignments of frequency resources, taking the status of a neighbor BS signaled via the wired interface into account, it might be impossible to follow a change in the status of the assignments of frequency resources at the neighbor BS due to a delay occurring in the wired interface. BS selects and assigns distributed frequency resources or continuous frequency resources, depending on the position of an MS in the cell and the transmit power of the BS.

## Description

### Background of the invention

The present invention relates to a wireless communication system, mobile station (MS), and base station (BS) pertaining to a communication system adopting OFDMA (Orthogonal Frequency Division Multiple Access) and realizing cellular communication.

As a method for multiplexing users in wireless communication, OFDMA is often adopted. In OFDMA, simultaneous access by plural mobile stations (MSs) is realized by assigning a subset of many subcarriers predefined by the OFDM scheme to each MS. In the OFDMA scheme, it is necessary to perform assignment of subcarriers to be used for data communication before data transmission is performed. For example, in a cellular wireless system adopting the OFDMA scheme, a base station (BS) determines subcarrier assignments and signals subcarrier assignment information to MSs through a dedicated control information channel.

For data transmission on downlink, which is from a BS toward MSs, the BS first assigns subcarriers to each MS, depending on the amount of data to be transmitted to the MS. Subcarrier assignment information is signaled from the BS to the MSs simultaneously with or before data transmission through the control information channel. Using the subcarriers assigned to each MS, the BS transmits data to each MS. An MS which is to receive data from the BS knows the subcarriers on which data has been transmitted to it from the subcarrier assignment information signaled by the BS and receives data based on that knowledge.

For data transmission on uplink, which is from MSs toward a BS, each MS first signals a data transmission request and information about the amount of data it wants to transmit to the BS. The BS assigns subcarriers to each MS, based on the data transmission request from the MS. Subcarrier assignment information is signaled from the BS to the MSs through the control information channel. After that, each MS knows the subcarriers on which it is allowed to transmit data from the subcarrier assignment information signaled by the BS and transmits data based on this knowledge. The BS receives data on the subcarriers assigned to each MS.

In this way, in OFDMA, information on subcarrier assignments to each MS, determined by a BS, is shared across the BS and each MS, which thereby realizes data communication in which adaptive bandwidth allocation is performed depending on the amount of transmission data.

In a cellular wireless system using OFDMA, MSs communicating with the same BS are usually assigned different subcarriers by using the above-described mechanism. Therefore, intra-cell interference does not become a problem. Rather, inter-cell interference is dominant that occurs when the same subcarrier has been assigned to MSs respectively communicating with different BSs. For this reason, there is a need for a mechanism to control inter-cell interference in an OFDMA system.

In the 3GPP, which is a standardization organization, a wireless communication system using OFDMA and SCFDMA (Single-Carrier Frequency Division Multiple Access) is standardized as E-UTRA (Evolved Universal Terrestrial Radio Access) and E-UTRAN (Evolved Universal Terrestrial Radio Access Network). In 3GPP R1-075014 and 3GPP R1-081595, a scheme for controlling inter-cell interference by frequency scheduling is under study.
In the 3GPP2, which is a standardization organization, a wireless communication system using OFDMA is standardized as UMB (Ultra Mobile Broadband). In 3GPP2 C.S0084-002-0 Version 3.0, 8.5.5.1.9 R-ODCH Power Control, a method for controlling inter-cell interference by power control is defined.

### Brief summary

In E-UTRA and E-UTRAN, subcarrier assignment information and transmit power information in each BS are exchanged between BSs via a communication interface between BSs, which is called X2.

Information on downlink transmit power is transmitted through X2 per minimum unit of subcarrier assignment called RB (Resource Block). This information is called RNTP (Relative Narrowband Transmit Power Indication). Each BS is able to know the subcarrier on which a neighbor BS transmits with a larger transmit power, using the RNTP signaled from the neighbor BS. On a subcarrier on which a neighbor BS transmits with larger transmit power, MSs communicating with the BS will receive larger interference power. Because an MS located at a cell edge is nearer to a neighbor BS, such MS tends to receive larger interference power than an MS located in the cell center. Therefore, the BS assigns a subcarrier on which a neighbor BS transmits with smaller transmit power, to a cell-edge MS which is more susceptible to interference and assigns a subcarrier on which the neighbor BS transmits with larger transmit power, to a cell-center MS which is less susceptible to interference. Thereby, it is possible to suppress interference power that each MS receives under a given level.

Uplink subcarrier assignment information is also transmitted through X2 as HII (High Interference Indication). HII includes information on RBs assigned to cell-edge MSs. Generally, MSs located at the cell edge of a BS and MSs located at the cell edge of a neighbor BS are likely to be sources of interference with each other. Thus, making use of information signaled by HII, a BS determines a subcarrier to be assigned to a cell-edge MS by selecting it among subcarriers other than those assigned by a neighbor BS to cell-edge MSs in the neighbor cell, so that mutual interference between cell-edge MSs in both cells can be suppressed.

By the way, subcarrier assignments to MSs are performed per physical packet or per HARQ (Hybrid Automatic Repeat Request) sub-packet which is a unit more granular than a physical packet. Transmission of a physical packet is mostly completed in a period of about several milliseconds to several tens of milliseconds. Hence, the status of subcarrier assignments at a BS can be considered to change as well in a period of about several milliseconds to several tens of milliseconds. However, it takes about 20 milliseconds to transmit information via the X2 interface. When a BS performs subcarrier assignments, taking the status of a neighbor BS signaled via X2 into account, it might be impossible to follow a change in the status of subcarrier assignments at the neighbor BS.

To address the above-noted problem, scattering (distributed) frequency resources are assigned to a cell-edge MS and continuous (localized) frequency resources are assigned to a cell-center MS.

For downlink transmission, distributed frequency resources are assigned to a cell-edge MS. As transmit power varies per subcarrier, the strength of interference power received from a neighbor BS varies with frequencies. By thus assigning distributed frequency resources to a cell-edge MS, a frequency diversity benefit is obtained, because the interference power varies with frequencies or subcarriers.

In downlink, frequencies on which a BS transmits with a large transmit power, e.g., subcarriers assigned to cell-edge MSs produce a large interference to an MS communicating with a neighbor BS. The assignment of distributed frequency resources to a cell-edge MS can avoid a condition that the transmit power is high in a particular frequency band and disperses the interference affecting MSs served by the neighbor BS. It is thus possible to suppress interference experienced by MSs served by the neighbor BS.

For uplink transmission, distributed frequency resources are assigned to a cell-edge MS. Subcarriers assigned to cell-edge MSs produce a large interference to a neighbor BS. However, the assignment of distributed frequency resources to a cell-edge MS can avoid a situation that the interference power received by the neighbor BS is high in a particular frequency band and disperses the interference. Also, even in a case where a high interference power is received from an MS communicating with a neighbor BS in a particular frequency band, by the assignment of distributed frequency resources to a cell-edge MS, a frequency diversity benefit is obtained, because the interference power varies with frequencies or subcarriers.

By use of the above-described method, each BS can perform autonomous subcarrier assignments not dependent on information signaled via the X2 interface without the need for taking account of the status of subcarrier assignments at a neighbor BS. Therefore, the problem is resolved.

According to an aspect of the present invention, each BS can perform autonomous subcarrier assignments without using information on frequency usage at a neighbor BS. Thereby, resource assignments can be performed adaptively, according to traffic to be handled by each BS and how many MSs connect to the BS, without depending on information signaled in a long period, such as parameters transmitted via the X2 interface.

### Brief description of the drawings

Exemplary embodiments of the present invention will be described in detail based on the following figures, wherein:
Fig. 1 is an architecture diagram of an OFDMA/SCFDMA cellular wireless communication system;
Fig. 2 is a configuration diagram of a BS node adopting the OFDMA/SCFDMA scheme;
Fig. 3 is a configuration diagram of an MS node adopting the OFDMA/SCFDMA scheme;
Fig. 4 is a sequence diagram illustrating a procedure of data communication on downlink;
Fig. 5 is a sequence diagram illustrating a procedure of data communication on uplink;
Fig. 6 is a diagram illustrating an example of RB assignment of Type 0;
Fig. 7 is a diagram illustrating an example of RB assignment of Type 1;
Fig. 8 is a diagram illustrating an example of RB assignment of Type 2;
Fig. 9 is a diagram illustrating an example of classifying MSs into areas;
Fig. 10 is a flowchart illustrating an RB assignment procedure in a first embodiment of the present invention;
Fig. 11 is a diagram illustrating an example of RB assignment in the first embodiment of the present invention.
Fig. 12 is a flowchart illustrating an RB assignment procedure in a second embodiment of the present invention;
Fig. 13 is a diagram illustrating an example of RB assignment in the second embodiment of the present invention;
Fig. 14 is a flowchart illustrating an RB assignment procedure in a third embodiment of the present invention;
Fig. 15 is a diagram illustrating an example of RB assignment in the third embodiment of the present invention;
Fig. 16 is a diagram illustrating an example of grouping of BSs;
Fig. 17 is a diagram illustrating a case where an MS falls within a range around a threshold for deciding Type 0 or Type 1;
Fig. 18 is a diagram illustrating an example of RB assignment in a case where Type 0 resources are lacking;
Fig. 19 is a diagram illustrating an example of RB assignment in a case where Type 1 resources are lacking;
Fig. 20 is a diagram illustrating a method of assigning distributed resources and localized resources for uplink transmission;
Fig. 21 is a flowchart illustrating an RB assignment procedure in a fourth embodiment of the present invention;
Fig. 22 is a diagram illustrating an example of RB assignment in the fourth embodiment of the present invention;
Fig. 23 is a diagram illustrating a method of assigning FH resources and FS resources for uplink transmission;
Fig. 24 is a flowchart illustrating an RB assignment procedure in a fifth embodiment of the present invention;
Fig. 25 is a diagram illustrating an example of RB assignment in the fifth embodiment of the present invention;
Fig. 26 is a flowchart illustrating an RB assignment procedure in a sixth embodiment of the present invention.
Fig. 27 is a diagram illustrating an example of RB assignment in the sixth embodiment of the present invention;
Fig. 28 is a flowchart illustrating an RB assignment procedure in a seventh embodiment of the present invention;
Fig. 29 is a diagram illustrating an example of RB assignment in the seventh embodiment of the present invention;
Fig. 30 is a diagram illustrating examples of deploying resources in the physical domain for uplink transmission for each BS group;
Fig. 31 is a diagram illustrating an example of RB assignment in a case where localized resources or FS resources are lacking in the present invention; and
Fig. 32 is a diagram illustrating an example of RB assignment in a case where distributed resources or FH resources are lacking in the present invention.

### Detailed description of the invention

In the following, embodiments are described as separate plural sections or embodiments, where necessary for the sake of convenience. Unless otherwise specified, these sections or embodiments are not irrelevant to each other, but have a relationship in which one provides a modification example, details, supplementary description, etc. of another. In the following description of embodiments, when the number of elements and the like (including the number of units, values, quantities, ranges, etc.) are mentioned, such mention is not limited to a specific number and may be more than or less than the specific number, unless otherwise specified, and unless, in principle, such mention is evidently limited to the specific number.

In the following description of embodiments, it goes without saying that components of something (including component steps and the like) are not always necessary, unless otherwise specified, and unless, in principle, they are evidently considered to be necessary. Likewise, in the following description of embodiments, when shapes, positional relations, etc. of components and the like are mentioned, such mention is intended to include those that are substantially approximate to or similar to their shapes, etc., unless otherwise specified, and unless, in principle, the mention is evidently considered not to include those. This applies to the above values and ranges as well.

Embodiments of the present invention will hereinafter be described in detail, based on the drawings. All drawings to explain the embodiments, identical members are in principle assigned the same referential numerals and their repeated descriptions are omitted.

Taking E-UTRA/E-UTRAN as an example, a cellular wireless communication system to which the present invention is applied is described in detailed with reference to the drawings.

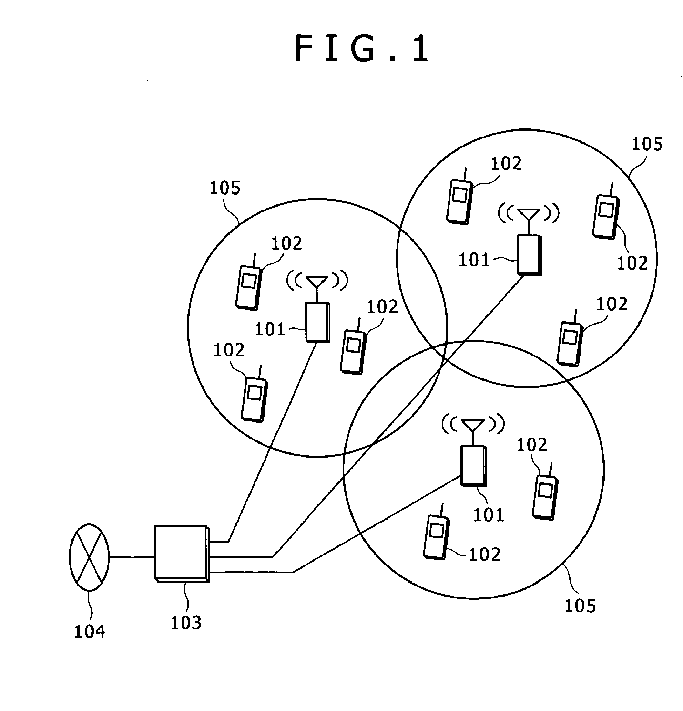

Fig. 1 shows an example of architecture of a cellular wireless communication system adopting an OFDMA/SCFDMA scheme. As shown in Fig. 1, a cellular wireless communication system is generally formed by plural base stations (BSs) and plural mobile stations (MSs). BSs 101 are connected to a BS control entity 103 by wired links and the BS control entity 103 further connects to a network 104 by a wired link. There is a framework in which MSs 102 connect to the BSs 101 by radio and are capable of communicate with the network 104 via the BS control entity 103. In the system of Fig. 1, the BSs 101 perform subcarrier assignments and signal assignment information to the MSs 102. A cell 105 indicates a coverage within which a BS 101 is capable of communicate with an MS 102 by a radio connection.

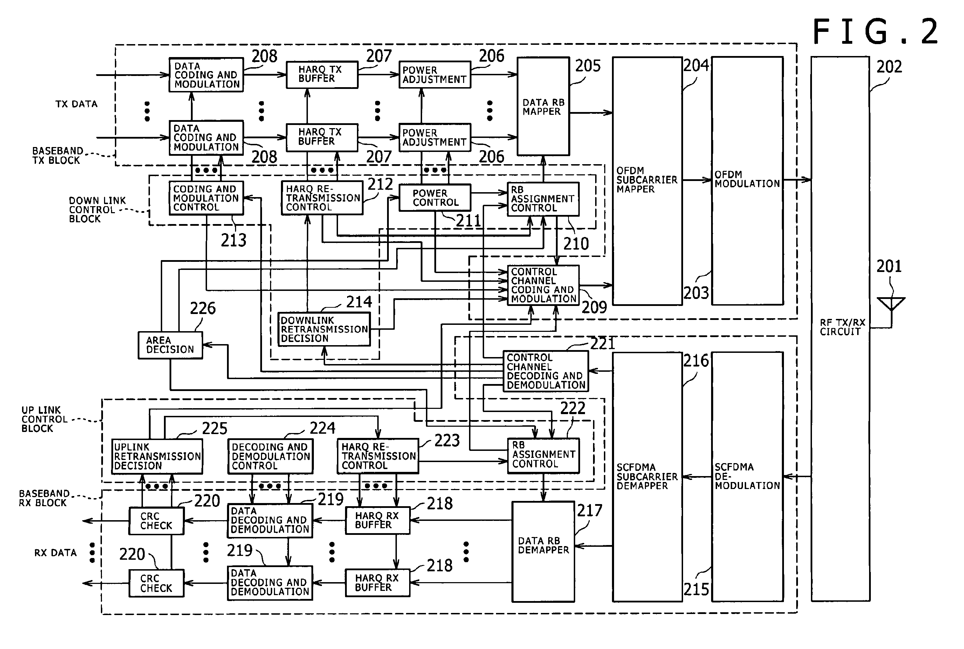

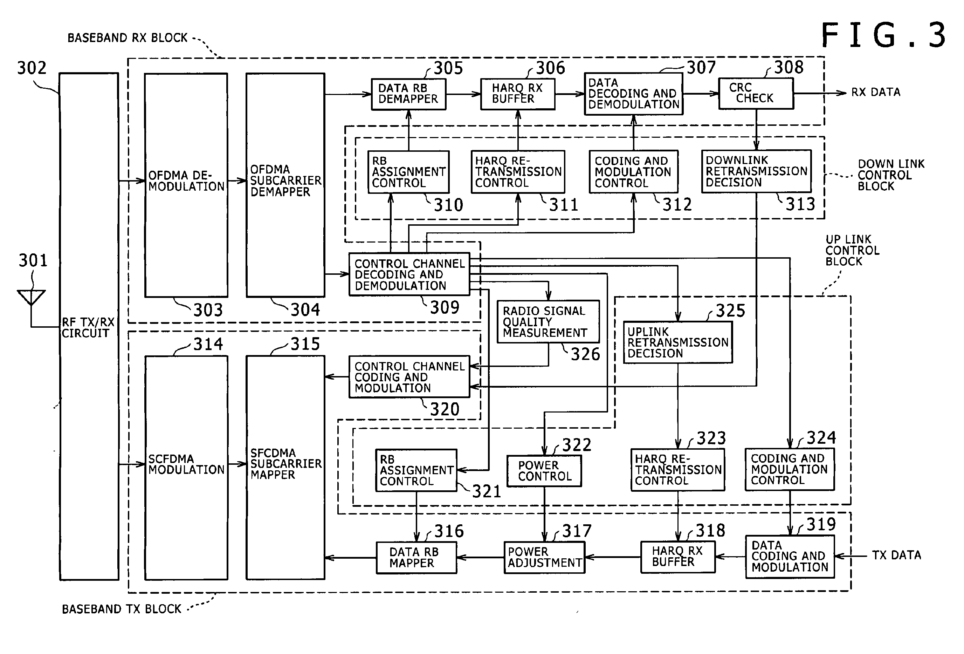

Configuration examples of a BS node and an MS node which realize the OFDMA/SCFDMA scheme are shown in Fig. 2 and Fig. 3 respectively.

A BS node is composed of a baseband Tx block, a downlink control block, a baseband Rx block, an uplink control block, an area decision 226, an RF Tx/Rx circuit 202, a Tx/Rx antenna 201. The baseband Tx block has a function of generating baseband signals for transmission and includes a data coding and modulation 208 which performs coding of transmission data for error correction and subcarrier modulation, an HARQ Tx buffer 207 which holds code words for HARQ retransmission, a power adjustment 206 which makes adjustment of subcarrier power, a data RB mapper 205 which maps modulation symbols to be transmitted to plural MSs onto RBs (Resource blocks) which are units of frequency resources, a control channel coding and modulation 209 which performs coding and modulation of control information, an OFDM subcarrier mapper 204 which arranges data and control information in an OFDM subcarrier region, and an OFDM modulation 203 which performs IFFT (Inverse Fast Fourier Transform) and adds a CP (cyclic Prefix). The downlink control block has a function of controlling data communication on downlink and includes an RB assignment control 210 which performs assignment of frequency resources (RBs) for downlink transmission to each MS, a power control 211 which specifies a value of transmit power, an HARQ retransmission control 212 which controls HARQ retransmission on downlink, a coding and modulation control 213 which determines a coding and modulation scheme to be used for downlink transmission, and a downlink retransmission decision 214 which decides whether an HARQ retransmission on downlink should be performed. The baseband Rx block has a function of detecting data and control information from received baseband signals and includes an SCFDMA modulation 215 which removes the CP and performs FFT (Fast Fourier Transform) and IDFT (Inverse Discrete Fourier Transform), an SCFDMA subcarrier demapper 216 which extracts data and control information arranged in a demodulated SCFDMA subcarrier region, a data RB demapper 217 which extracts modulation symbols mapped onto RBs for each MS, a control channel decoding and demodulation 221 which performs demodulation and decoding of control information, an HARQ Rx buffer 218 which stores received HARQ sub-packets, a data decoding and demodulation 219 which performs demodulation and decoding of data which is coded for error correction, and a CRC (Cyclic Redundancy Check) check which detects an error from decoded data. The uplink control block has a function of controlling data communication on uplink and an RB assignment control 222 which performs assignment of frequency resources (RBs) for uplink transmission to each MS, an HARQ retransmission control 223 which controls HARQ retransmission on uplink, a decoding and demodulation control 224 which determines a coding and modulation scheme to be used for uplink transmission, and an uplink retransmission decision 225 which decides whether an HARQ retransmission on uplink should be performed. The area decision 226 decides whether each MS is located in a cell-edge area or a cell-center area.
For example, the area decision 226 decides whether each MS is located in a cell-edge area or a cell-center area according to feedback information from UE such as RSRP and CQI, or the information from the neighboring BSs which indicates the level of the interference that the neighboring BSs are received or the interference that the neighboring BSs give to this BS.
The RF Tx/Rx circuit 202 converts baseband signals to RF (Radio Frequency) signals and vice versa and performs power amplification. The Tx/Rx antenna 201 transmits and receives RF signals over radio space.

In the present invention, an area to which an MS belongs is determined by the area decision 226 in a BS, depending on RSRP (Reference Signal Received Power) and CQI (Channel Quality Indicator) received from each MS through the control channel decoding and demodulation 221. Area information is sent to the power control 211 and the RB assignment control 210 and used by them to distribute a transmit power on downlink and to perform RB assignment on downlink. The area information is also sent to the RB assignment control 222 for uplink and used to perform RB assignment on uplink. Information on RB assignments on downlink and uplink is signaled to each MS through the control channel coding and modulation 209. Moreover, each MS may signal information about an SN ratio and/or a data transmission rate of a signal received by the MS to the BS. Based on that information, the distribution of a transmit power on downlink, RB assignment on downlink, and RB assignment on uplink may be performed. Thereby, transmit power distribution and RB assignments adaptive to the status of a channel that changes momentarily are accomplished.

An MS node is composed of a baseband Rx block, a downlink control block, an uplink control block, a baseband Tx block, a radio signal quality measurement 326, an RF Tx/Rx circuit 302, a Tx/Rx antenna 301. The baseband Rx block has a function of detecting data, control information, and broadcast information from received baseband signals and includes an OFDMA modulation 303 which removes the CP and performs FFT, an OFDMA subcarrier demapper 304 which extracts data and control information arranged in a demodulated OFDMA subcarrier region, a data RB demapper 305 which extracts modulation symbols mapped onto RBs, a control channel decoding and demodulation 309 which performs demodulation and decoding of control information, an HARQ Rx buffer 306 which stores received HARQ sub-packets, a data decoding and demodulation 307 which performs demodulation and decoding of data which is coded for error correction, and a CRC check 308 which detects an error from decoded data. The downlink control block has a function of controlling data communication on downlink and includes an RB assignment control 310 which gives an indication on the frequency resources (RBs) for downlink transmission assigned by BS to the data RB demapper 305, an HARQ retransmission control 311 which controls HARQ retransmission on downlink, a coding and modulation control 312 which gives an indication on the coding and modulation scheme to be used for downlink transmission specified by BS to the data decoding and demodulation 307, and a downlink retransmission decision 313 which decides whether to request an HARQ retransmission on downlink. The baseband Tx block has a function of generating baseband signals for transmission and includes a data coding and modulation 319 which performs coding of transmission data for error correction and subcarrier modulation, an HARQ Tx buffer 318 which holds code words for HARQ retransmission, a power adjustment 317 which makes adjustment of transmit power, a data RB mapper 316 which maps modulation symbols to be transmitted to BS onto RBs, a control channel coding and modulation 320 which performs coding and modulation of control information, an SCFDMA subcarrier mapper 315 which arranges data and control information in an SCFDMA subcarrier region, and an SCFDMA modulation 314 which performs DFT (Discrete Fourier Transform) and IFFT and adds a CP. The uplink control block has a function of controlling data communication on uplink and includes an RB assignment control 321 which gives an indication on the frequency resources (RBs) for uplink transmission signaled from BS to the data RB mapper 316, a power control 322 which controls the transmit power according to a power control command or the like signaled from BS, an HARQ retransmission control 323 which controls HARQ retransmission on uplink, a coding and modulation control 324 which gives an indication on the coding and modulation scheme to be used for uplink transmission specified by BS to the data coding and modulation 319, and an uplink retransmission decision 325 which decides whether an HARQ retransmission on uplink should be performed. The radio signal quality measurement 326 determines RSRP (Reference Signal Received Power) which is indicative of a distance from BS to MS from the received signal power and CQI which is indicative of the quality of a downlink channel from the received signal power. These signal quality indicators are coded and modulated by the control channel coding and modulation 320 and transmitted to BS as an SCFDMA signal through the SCFDMA subcarrier mapper 315 and the SCFDMA modulation 314. Based on the RSRP, the area decision 226 in the BS decides whether each MS is located in the cell-edge area or the cell-center area. The RF Tx/RX circuit 302 converts baseband signals to RF (Radio Frequency) signals and vice versa and performs power amplification. The Tx/Rx antenna 301 transmits and receives RF signals over radio space.

In the present invention, information on RB assignments determined by BS is signaled through the control channel decoding and demodulation 309. Information on RB assignments on downlink is used to receive data on downlink through the RB assignment control 310. Information on RB assignments on uplink is used to transmit data on uplink through the RB assignment control 321.

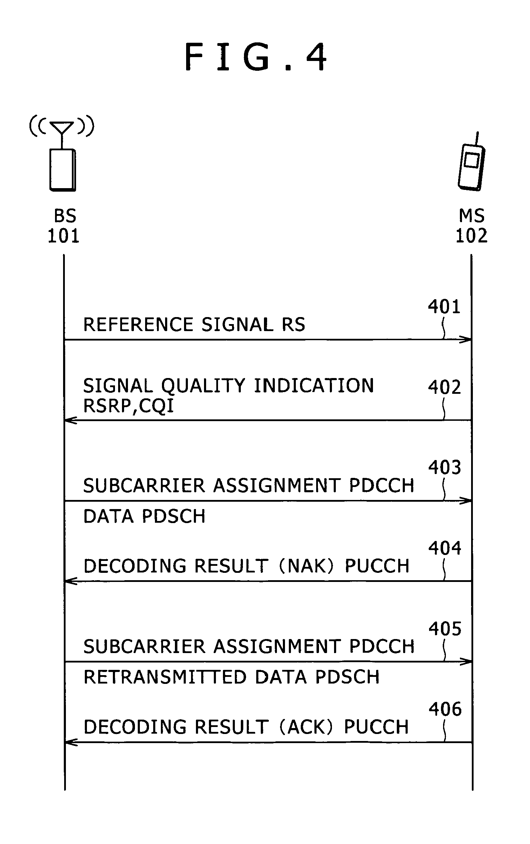

Fig. 4 illustrates an example of a procedure in which RB assignment information is signaled from a BS 101 to an MS 102 for data communication on downlink. The BS 101 transmits a reference signal called an RS (Reference Signal) in a sequence 401. The MS 102 measures the RS received power and transmits the thus measured signal quality as RSRP and CQI to the BS 101 in a sequence 402. Based on RSRP information collected from each MS, the BS 101 classifies MSs into the areas depending on distance from the BS. In the following, two areas, the cell-edge area and the cell-center area, are assumed; however, three or more areas may be predefined. The BS 101 determines RB assignment depending on the area or the like to which the MS belongs and transmits RB assignment information to the MS 102 via a PDCCH (Physical Downlink Control Channel) in a sequence 403. At the same time, the BS 101 transmits data via a PDSCH (Physical Downlink Shared Channel) in the sequence 403. The MS 102 decodes the data, using the RB assignment information received in the sequence 403. In a sequence 404, the MS 102 transmits the decoding result to the BS 101 via a PUCCH (Physical Uplink Control Channel). In the example of Fig. 4, the MS transmits NAK (Nacknowledgement), as the MS failed to decode the data. For a NAKed packet, the BS 101 performs an HARQ retransmission in a sequence 405. When the MS 102 has decoded successfully the packet data, the MS 102 transmits ACK (Acknowledgement) to the BS 101 as in a sequence 406.

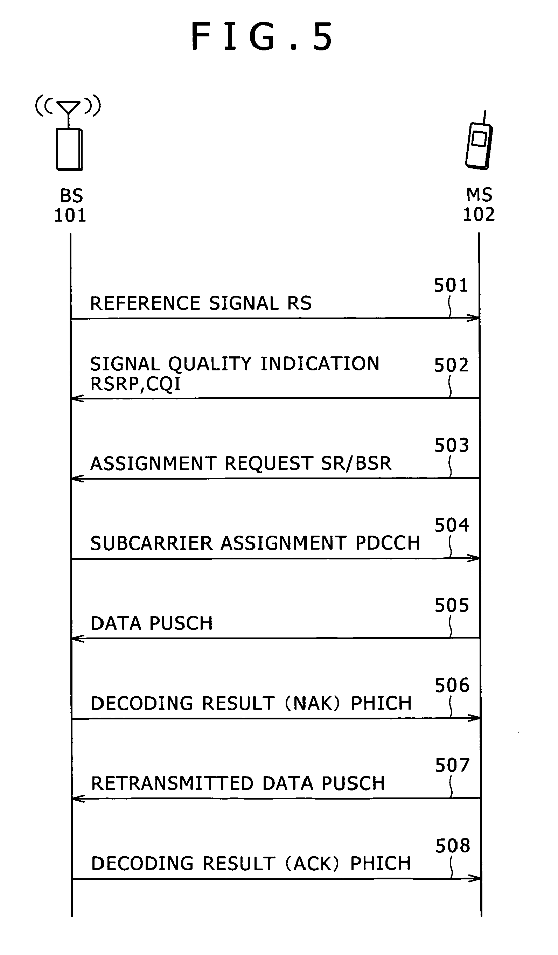

Fig. 5 illustrates an example of a procedure in which RB assignment information is signaled from the BS 101 to the MS 102 for data communication on uplink. The BS 101 transmits a reference signal called RS in a sequence 501. The MS 102 measures the RS received power and transmits the measurement result as RSRP to the BS 101 in a sequence 502. Based on RSRP information collected from each MS, the BS 101 classifies MSs into the areas depending on distance from the BS. Area decision processing is the same as for downlink and common processing may be performed for uplink and downlink. In a sequence 503, the MS 102 requests frequency resource assignment to the BS 101 by SR (Scheduling Request). If a frequency resource has already been assigned to the MS 102, the MS may signal the amount of data it wants to transmit to the BS 101 by BSR (Buffer Status Report). Once having received the frequency resource assignment request, the BS 101 determines RB assignment depending on the area or the like to which the MS belongs and transmits RB assignment information to the MS 102 via the PDCCH in a sequence 504. The MS 102 transmits data, using the assigned RB via a PUSCH (Physical Uplink Shared Channel) in a sequence 505. Depending on the result of decoding the data, the BS 101 transmits ACK or NAK to the MS 102 via a PHICH (Physical HARQ Indicator Channel). The MS 102 retransmits the data, if necessary, according to the information such as the decoding result signaled from the BS 101.

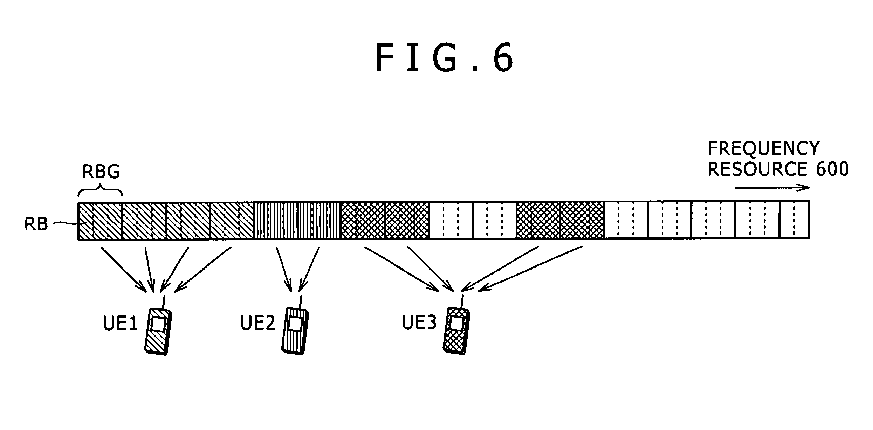

Figs. 6 through 8 illustrate examples of RB assignment in E-UTRA. In E-UTRA, RB assignment schemes of Type 0, Type 1, and Type 2 are formulated. These schemes are characterized by different formats of RB assignment information signaled from BS to MS over the PDCCH. Each RB assignment scheme for downlink is discussed, using Figs. 6 through 8.

Fig. 6 illustrates an RB assignment scheme called Type 0. In Type 0, some continuous RBs are bundled into an RBG (Resource Block Group). Type 0 assumes an RBG as a minimum unit of assignment of frequency resources 600 and an assignment is specified in a bit-mapped manner from BS to MS. That is, it can be specified that each respective RBG is assigned or not assigned to an MS. Type 0 is suitable for assigning continuous (localized) frequency resources in the frequency domain. However, it is not always necessary to assign continuous frequency resources. Resources separated away from each other in the frequency domain may be assigned, like assignment to UE3 in Fig. 6.

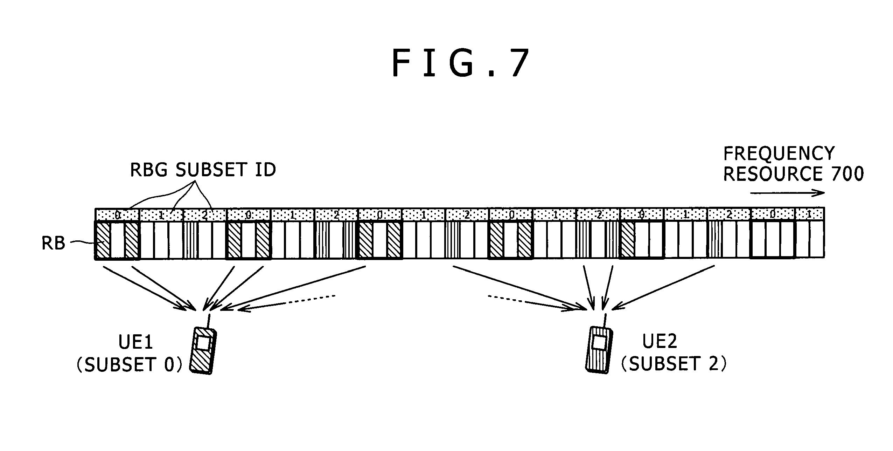

Fig. 7 illustrates an RB assignment scheme called Type 1. In Type 1, several RBGs are bundled into an RBG subset. Typically, an RBG subset is formed by combining non-continuous RBGs in the frequency domain as in Fig. 7. When assigning frequency resources 700 to an MS, the BS specifies ID of an RBG subset and RBs within the RBG subset for the MS. Assignment of RBs within an RBG subset is performed in a bit-mapped manner. For example, "0" is specified as RBG subset ID 702 for an MS UE1 in Fig. 7. RBs within the RBG subset with ID = 0 represented by bold-line boxes in Fig. 7 can be assigned to the MS UE1. Type 1 is suitable for assigning scattering (distributed) frequency resources in the frequency domain.

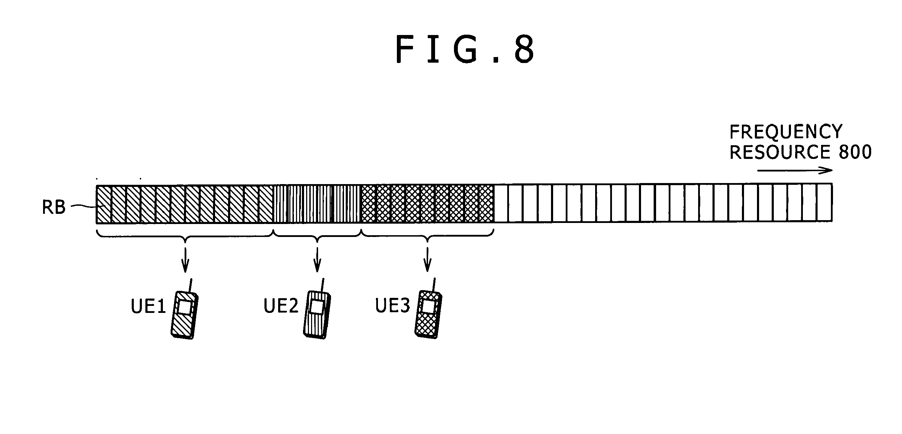

Fig. 8 illustrates an RB assignment scheme called Type 2. In Type 2, continuous RBs of frequency resources 800 are assigned. In Type 2, BS specifies the ID of a starting RB of continuous RBs which are assigned to an MS and the number of assigned RBs. Unlike Type 0, continuous RBs are always assigned, though RB is the minimum unit of assignment in Type 2.

In E-UTRA, the RB assignment methods of Types 0 to 2 are available for downlink transmission, but only Type 2 is available for uplink transmission. For uplink transmission, it is selectable whether to apply frequency hopping in Type 2.

### First Embodiment

The following describes a first embodiment to which the present invention is applied. In the first embodiment, resource assignment of Type 1 is carried out for cell-edge MSs in order to disperse interference by adjusting the interference power from a neighbor BS experienced by the cell-edge MSs in downlinks by appropriate RB assignments, and moreover, to disperse interference affecting MSs communicating with the neighbor BS in the frequency domain.

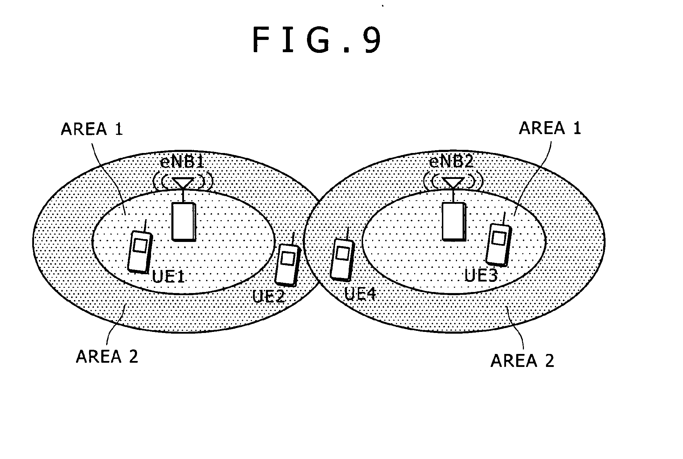

Fig. 9 illustrates an example of classifying MSs into the areas. In Fig. 9, as for MSs communicating with a BS eNBl, an MS UE1 is classified into the cell-center area (area 1) and an MS UE2 is classified into the cell-edge area (area 2). As for MSs communicating with a BS eNB2, an MS UE3 is classified into the cell-center area (area 1) and an MS UE4 is classified into the cell-edge area (area 2). The following description assumes that MSs are classified into the areas as in Fig. 9.

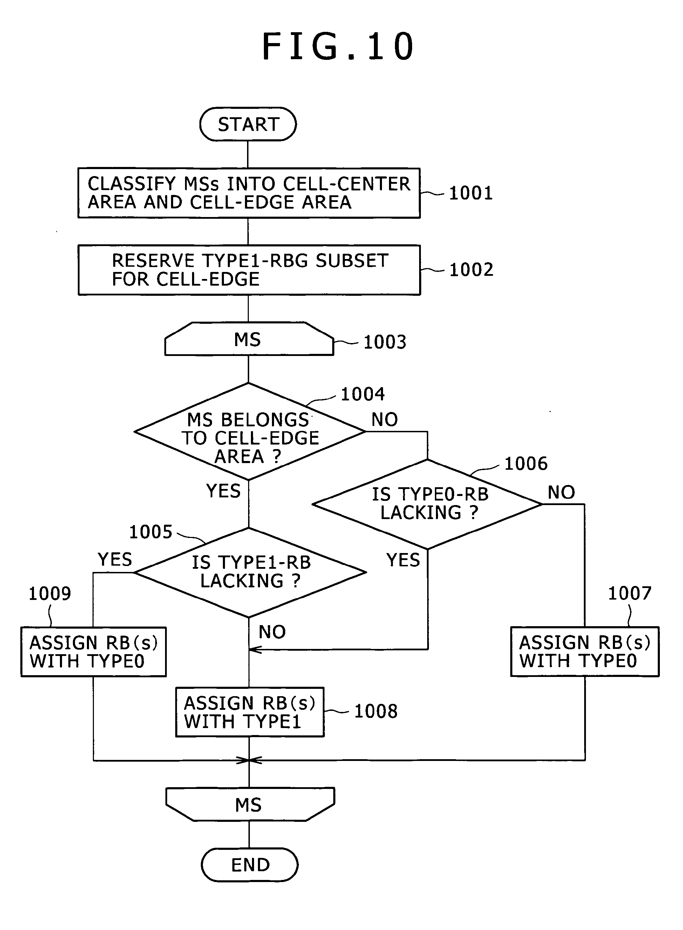

Fig. 10 illustrates an RB assignment procedure which is performed at BS in the present embodiment. First, BS classifies MSs communicating with the BS that executes RB assignment into the plural areas. In the example of Fig. 10, if RSRP signaled from an MS is equal to or more than a predetermined threshold value, BS judges that the distance from the BS to the MS is rather short and classifies the MS into the cell-center area; if the RSRP is less than the threshold value, BS judges that the distance from the BS to the MS is rather long and classifies the MS into the cell-edge area (1001). Then, BS divides frequency resources available in the system into resources (Type 1 resources) to be assigned to MSs in the cell-edge area and resources (Type 0 resources) to be assigned to MSs in the cell-center area. The division of the resources is carried out by reserving one of more RBG subsets as the Type 1 resources (1002).

Then, BS performs resource assignment of Type 0 or Type 1, according to the area in which each MS 1003 is located. If MS belongs to the cell-edge area (YES in 1004), BS judges that interference receiving from a neighbor BS is large and assigns RBs from among Type 1 resources to the MS by Type 1 assignment. If Type 1 resources are lacking, as they have already been assigned to other MSs (YES in 1005), BS may assign Type 0 resources (1009) as in Fig. 10. Alternatively, BS may assign no RB to avoid giving rise to interference. If MS belongs to the cell-center area, BS judges that interference receiving from a neighbor BS is small and assigns RBs to the MS by Type 0 assignment (1007). Because MS in the cell-center area experiences a small interference from a neighbor BS, either of Type 0 and Type 1 resources may be assigned. If Type 0 resources are lacking, as they have already been assigned to other MSs (YES in 1006), BS may assign Type 1 resources (1008) as in Fig. 10. Alternatively, BS may assign no RB so that available Type 1 resources may remain unoccupied. In a case that continuous RBs from Type 0 resources are assigned, Type 2 may be used instead of Type 0.

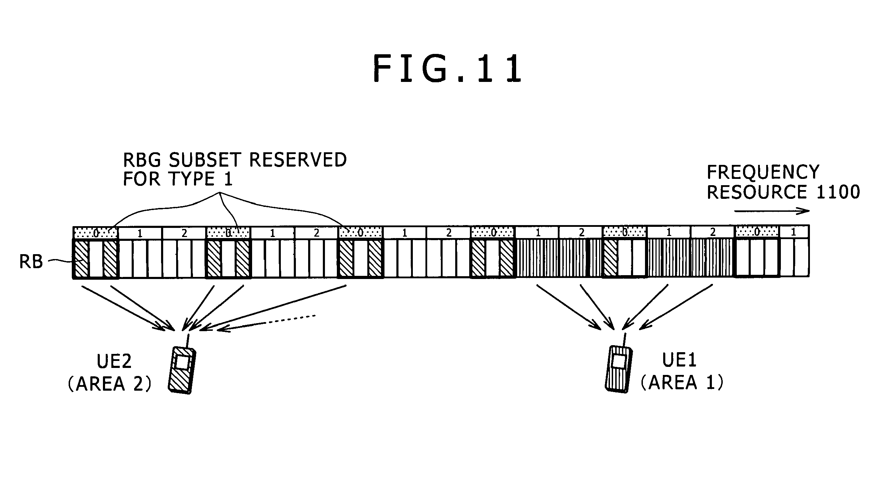

Fig. 11 illustrates an example of the result of RB assignment performed at the BS eNB1 in the present embodiment. In Fig. 11, RBs are assigned to the MS UE1 by Type 0 assignment because the MS UE1 belongs to the cell-center area and RBs are assigned to the MS UE2 by Type 1 assignment because the MS UE2 belongs to the cell-edge area. In Fig. 11, an RBG subset with ID = 0 is reserved for MSs in the cell-edge area and UE2 is assigned RBs within the reserved RBG subset. UE1 is assigned frequency resources 1100 in units of RBG by Type 0 assignment from among RBs other than the reserved RBG subset with ID = 0.

### Second Embodiment

The following describes a second embodiment to which the present invention is applied. In the second embodiment, resource assignment of Type 1 is carried out for MSs for which transmit power per RB is more than a given value in order to disperse interference caused by RBs with a large transmit power in downlinks.

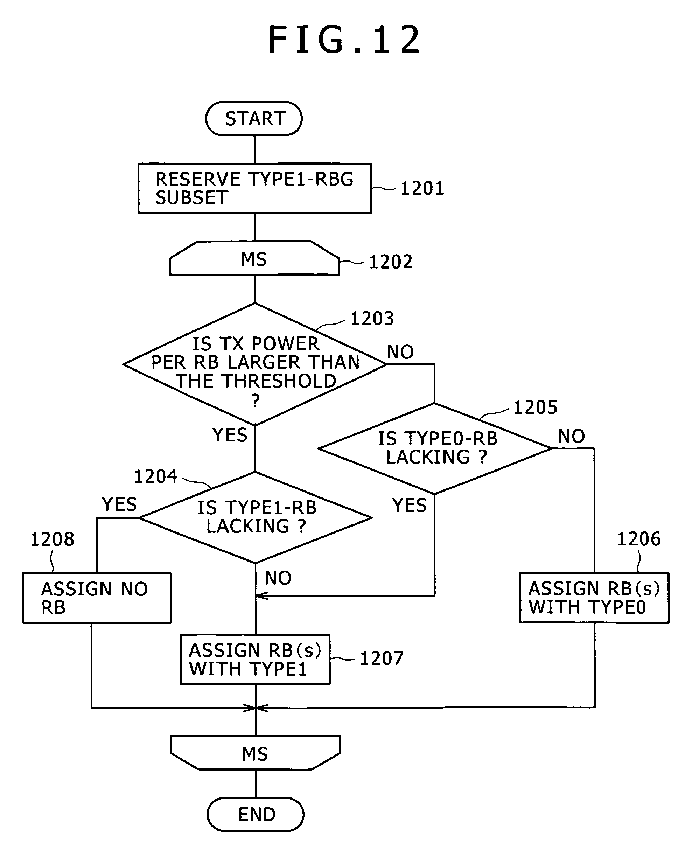

Fig. 12 illustrates an RB assignment procedure which is performed at BS in the present embodiment. First, BS divides frequency resources available in the system into resources (Type 1 resources) to be assigned to MSs for which transmit power per RB is large and resources (Type 0 resources) to be assigned to MSs for which transmit power per RB is small. The division of the resources is carried out by reserving one of more RBG subsets as the Type 1 resources (1201). Then, BS performs resource assignment of Type 0 or Type 1, according to the transmit power per RB of each MS 1202. If the transmit power per RB for MS is equal to or more than a preconfigured threshold value (YES in 1203), BS judges that the MS produces a large interference and assigns RBs from among Type 1 resources to the MS by Type 1 assignment. If Type 1 resources are lacking, as they have already been assigned to other MSs (YES in 1204), BS may assign no RB to avoid giving rise to interference as in Fig. 12 (1208) or may assign Type 0 resources. If the transmit power per RB for MS is less than the preconfigured threshold value, BS judges that the MS produces a small interference and assigns RBs to the MS by Type 0 assignment (1206). If Type 0 resources are lacking, as they have already been assigned to other MSs (YES in 1205), Type 1 resources may be assigned (1008) as in Fig. 12. Alternatively, no RB may be assigned so that available Type 1 resources may remain unoccupied. In a case that continuous RBs from Type 0 resources are assigned, Type 2 may be used instead of Type 0.

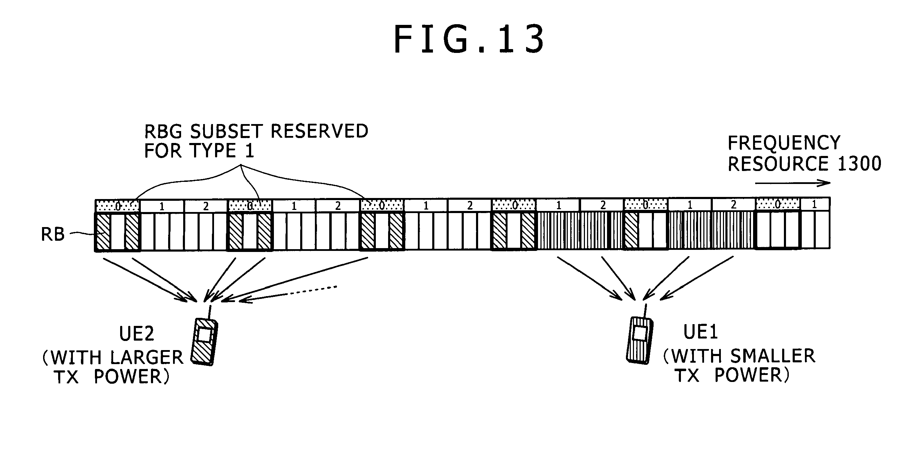

Fig. 13 illustrates an example of the result of RB assignment in the present embodiment. In Fig. 13, RBs are assigned to the MS UE2 by Type 1 assignment because the MS UE2 was judged as being allocated a large transmit power per RB and RBs are assigned to the MS UE1 by Type 0 assignment because the MS UE1 was judged as being allocated a small transmit power. In Fig. 13, an RBG subset with ID = 0 is reserved for Type 1 and UE2 is assigned RBs within the reserved RBG subset. UE1 is assigned frequency resources 1300 in units of RBG by Type 0 assignment from among RBs other than the reserved RBG subset with ID = 0.

### Third Embodiment

The following describes a third embodiment to which the present invention is applied. In the third embodiment, resource assignment of Type 1 that makes it easy to stabilize communication equality is carried out for cell-edge MSs in order to stabilize the communication equality of cell-edge MSs in downlinks.

The following description assumes that MSs are classified into the areas as in Fig. 9.

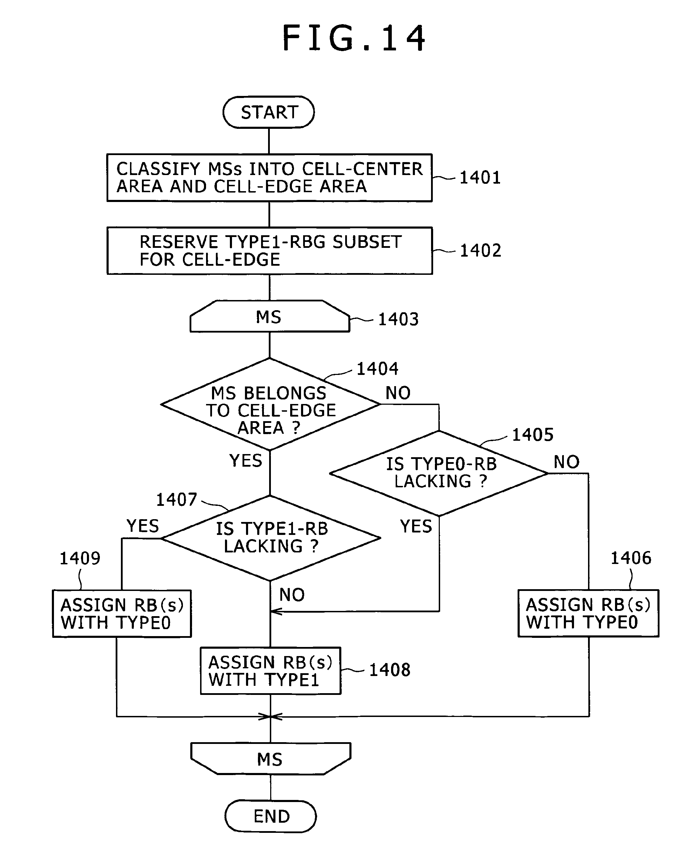

Fig. 14 illustrates an RB assignment procedure which is performed at BS in the present embodiment. First, BS classifies MSs communicating with the BS that executes RB assignment into the plural areas (1401). In the example of Fig. 14, if RSRP signaled from an MS is equal to or more than a predetermined threshold value, BS judges that the distance from the BS to the MS is rather short and classifies the MS into the cell-center area; if the RSRP is less than the threshold value, BS judges that the distance from the BS to the MS is rather long and classifies the MS into the cell-edge area. Then, BS divides frequency resources available in the system into resources (Type 1 resources) to be assigned to MSs in the cell-edge area and resources (Type 0 resources) to be assigned to MSs in the cell-center area (1402). The division of the resources is carried out by reserving one of more RBG subsets as the Type 1 resources. Then, BS performs resource assignment of Type 0 or Type 1, according to the area in which each MS 1403 is located. If MS belongs to the cell-edge area (YES in 1404), BS judges that interference receiving from a neighbor BS is large and assigns RBs from among Type 1 resources to the MS by Type 1 assignment (1408). If Type 1 resources are lacking, as they have already been assigned to other MSs (YES in 1407), BS may assign Type 0 resources (1409) as in Fig. 14. Alternatively, the BS may assign no RB. If MS belongs to the cell-center area, BS judges that interference receiving from a neighbor BS is small and assigns RBs to the MS by Type 0 assignment (1406). If Type 0 resources are lacking, as they have already been assigned to other MSs (YES in 1405), BS may assign Type 1 resources as in Fig. 14 or may assign no RB. In a case that continuous RBs from Type 0 resources are assigned, Type 2 may be used instead of Type 0.

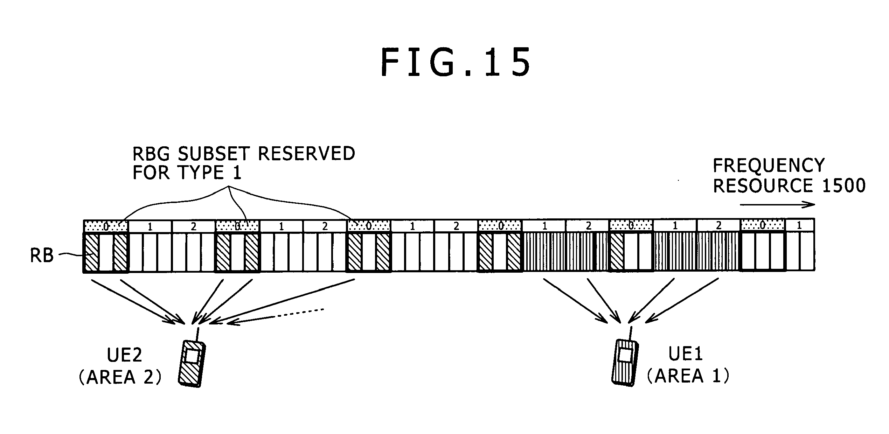

Fig. 15 illustrates an example of the result of RB assignment performed at the BS eNB1 in the present embodiment. In Fig. 15, RBs are assigned to the MS UE1 by Type 0 assignment because the MS UE1 belongs to the cell-center area and RBs are assigned to the MS UE2 by Type 1 assignment because the MS UE2 belongs to the cell-edge area. In Fig. 15, an RBG subset with ID = 0 is reserved for Type 1 and UE2 is assigned RBs within the reserved RBG subset. UE1 is assigned frequency resources 1500 in units of RBG by Type 0 assignment from among RBs other than the reserved RBG subset with ID = 0.

In the first to third embodiments, the descriptions have been made, assuming that BS reserves the RBG subset with ID = 0 as Type 1 resources. When doing so, adjacent BSs should reserve different RBG subsets to avoid that cell-edge MSs in the adjacent cells of the BSs use a same frequency. Furthermore, this makes it possible to reduce the influence of interference.

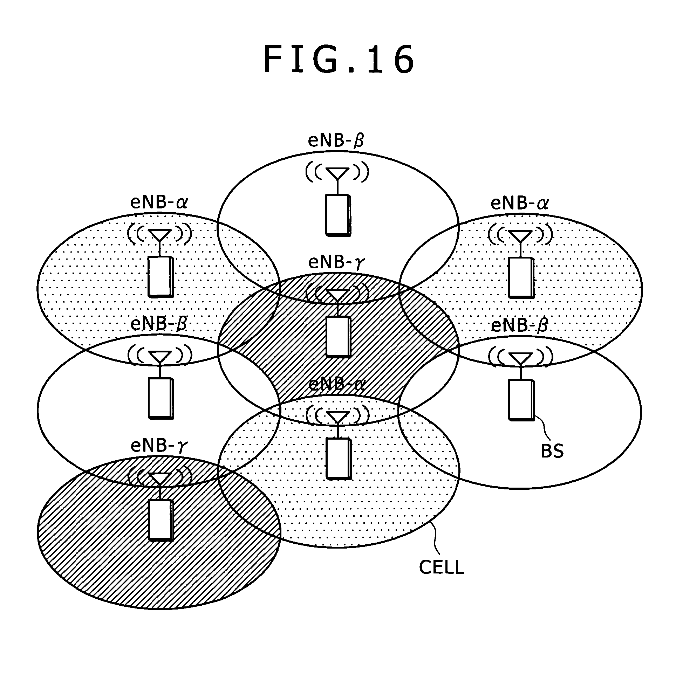

To realize this, a pattern in which RBG subsets are to be reserved by the BSs should be defined in advance when designing cells, as is shown in Fig. 16. In Fig. 16, BS groups eNB-α, eNB-β, and eNB-γ reserve different RBG subsets with ID = 0, ID = 1, and ID = 2 as Type 1 resources, respectively.

Alternatively, an RBG subset to be reserved as Type 1 resources may be determined according to a physical cell ID that is specific to a BS or determined randomly. Additionally, each BS may dynamically change the RBG subset to be reserved as Type 1 resources by reference to RNTP information signaled from its surrounding BSs.

The first to third embodiments have illustrated a method in which one or more RBG subsets are reserved as Type 1 resources. However, in the method in which a given amount of resources are reserved beforehand for a specific MS group in this way, it may occur that reserved resources become lacking.

If resources of Type suitable for an MS are lacking, resources of another Type may be assigned to the MS, as already noted in the first to third embodiments.

Alternatively, BS may assign resources of any Type to an MS that falls within a range around the threshold, when classifying MSs and BS preferentially assigns resources of Type including more unoccupied RBs. Here, an MS that falls within a range around the threshold refers to the MS for which RSRP is close to the threshold for deciding either the cell-edge area or the cell-center area in which the MS is located in the first and third embodiments or the MS for which transmit power per RB is close to the threshold for deciding either Type 0 or Type 1 according to the transmit power in the second embodiment. As for decision of whether each MS falls within a range around the threshold, the range may be defined beforehand. If resources of one Type become lacking, resources of Type including more unoccupied RBs may be assigned to MSs in descending order of closeness to the threshold.

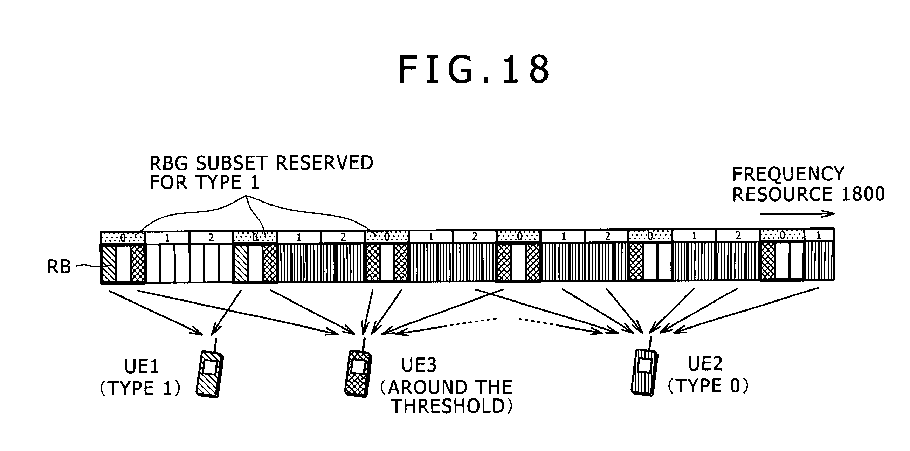

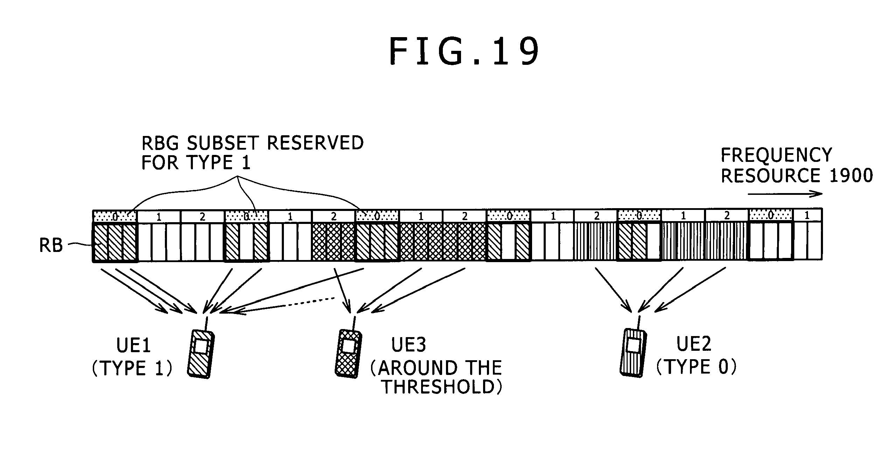

A method in which resources of any Type are assigned to MS falling within a range around the threshold is explained, using Figs. 18 and 19. In the following, it is assumed that RBs are assigned to the MS UE1 by Type 0 assignment and RBs are assigned to the MS UE2 by Type 1 assignment. MS UE3 is assumed to fall within the range around the threshold. Fig. 18 illustrates an example of RB assignment in a case where Type 0 resources are lacking. The MS UE3 is assigned RBGs from ample frequency resources 1800 of Type 1. On the other hand, Fig. 19 illustrates an example of RB assignment in a case where Type 1 frequency resources are lacking. The UE3 is assigned RBGs from ample frequency resources 1800 of Type 0.

By the method as described above, it is possible to avoid a lack of reserved frequency resources and flexibly respond to a change in the required amount of resources due to varying traffic of an MS group of each Type.

### Fourth Embodiment

The following describes a fourth embodiment to which the present invention is applied. In the fourth embodiment, assignment of distributed resources (RBs) is carried out for cell-edge MSs in order to disperse interference by adjusting the interference power from an MS communicating with a neighbor BS experienced by the cell-edge MSs in uplinks by appropriate RB assignments, and moreover, to disperse interference affecting the neighbor BS in the frequency domain.

The following description assumes that MSs are classified into the areas as in Fig. 9.

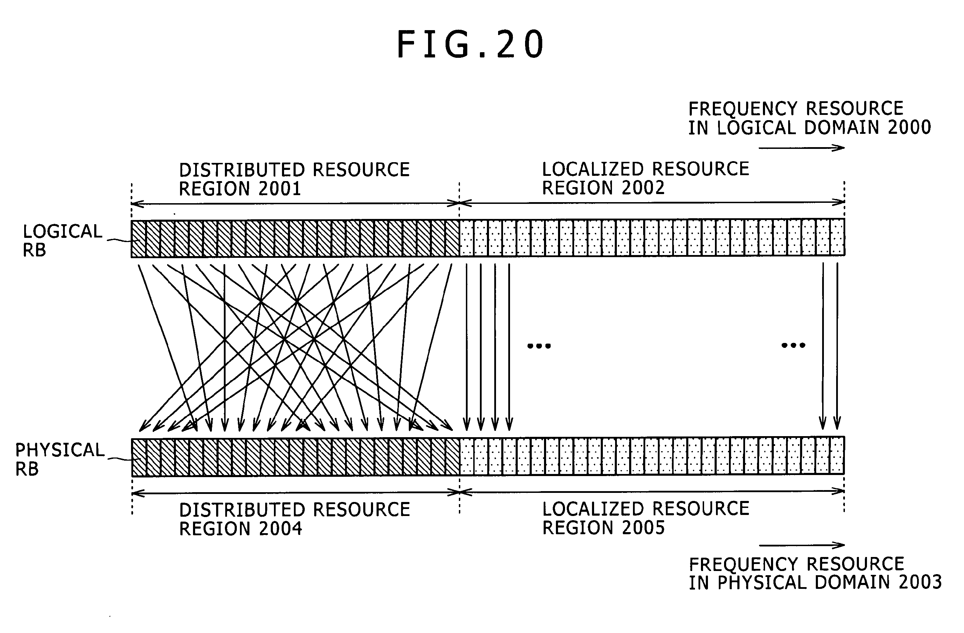

For uplink transmission, continuous RBs are assigned by Type 2 assignment. Assignment of distributed RBs and assignment of localized RBs in the present embodiment are explained, using Fig. 20. It is assumed that assignment of RBs of frequency resources 2000 in a logical domain is carried out and continuous logical RBs are assigned to each MS. First, BS divides logical frequency resources 2000 into a distributed resource region 2001 and a localized resource region 2002. BS assigns continuous logical RBs in the distributed resource region 2001 to an MS in the cell-edge area, permulates the logical RBs, and maps them onto distributed physical RBs. On the other hand, BS assigns continuous logical RBs in the localized resource region 2002 to an MS in the cell-center area and maps the logical RBs onto continuous physical RBs without permulating them. In the example of Fig. 20, a method of dividing physical frequency resources 2003, that is, dividing the resources into a distributed resource region 2004 and a localized resource region 2005 in a physical domain is common to that in the logical domain; however, the method of division not always must be common.

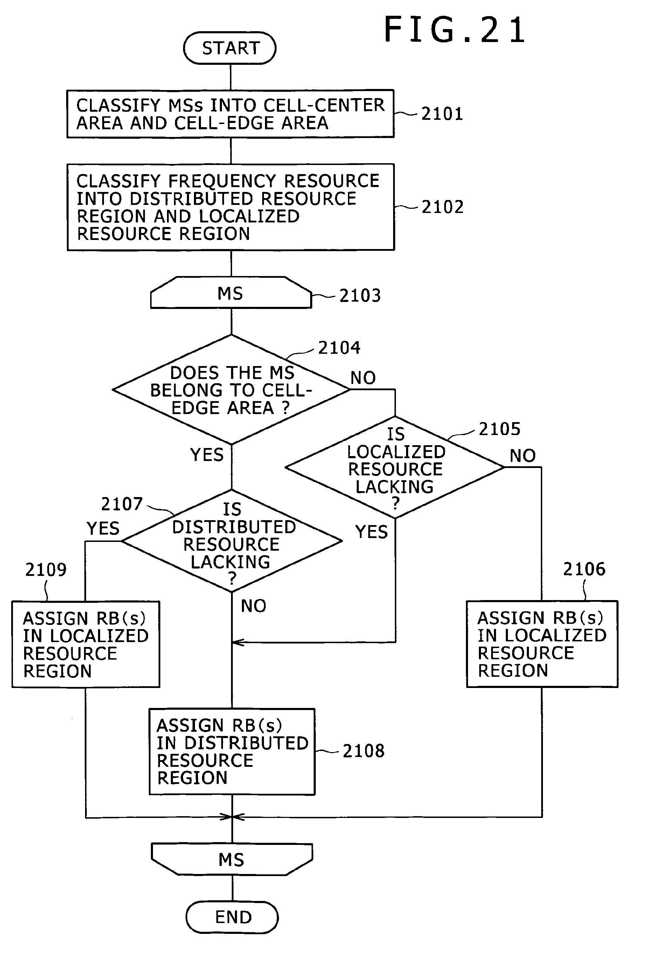

Fig. 21 illustrates an RB assignment procedure which is performed at BS in the present embodiment. First, BS classifies MSs communicating with the BS that executes RB assignment into the plural areas. In the example of Fig. 21, if RSRP signaled from an MS is equal to or more than a predetermined threshold value, BS judges that the distance from the BS to the MS is rather short and classifies the MS into the cell-center area; if the RSRP is less than the threshold value, BS judges that the distance from the BS to the MS is rather long and classifies the MS into the cell-edge area (2101). Then, BS divides frequency resources available in the system into the distributed resource region and the localized resource region by the already stated method (2102). Then, BS performs logical RB assignment in the distributed resource region or the localized resource region, according to the area in which each MS 2103 is located. If MS belongs to the cell-edge area (YES in 2104), BS judges that interference receiving from a neighbor BS is large and assigns logical RBs from the distributed resource region to the MS by Type 2 assignment (2108). If RBs in the distributed resource region are lacking, as they have already been assigned to other MSs (YES in 2107), BS may assign logical RBs from the localized resource region (2109) as in Fig. 21. Alternatively, BS may assign no logical RB. If MS belongs to the cell-center area, BS judges that interference receiving from a neighbor BS is small and assigns logical RBs from the localized resource region to the MS (2106). If RBs in the localized resource region are lacking, as they have already been assigned to other MSs (YES in 2105), BS may assign logical RBs from the distributed resource region as in Fig. 21 or may assign no logical RB. In a case where frequency resources are lacking in either of the resource regions, it is also possible to assign logical RBs across the two resource regions, as long as continuous logical RBs are assigned.

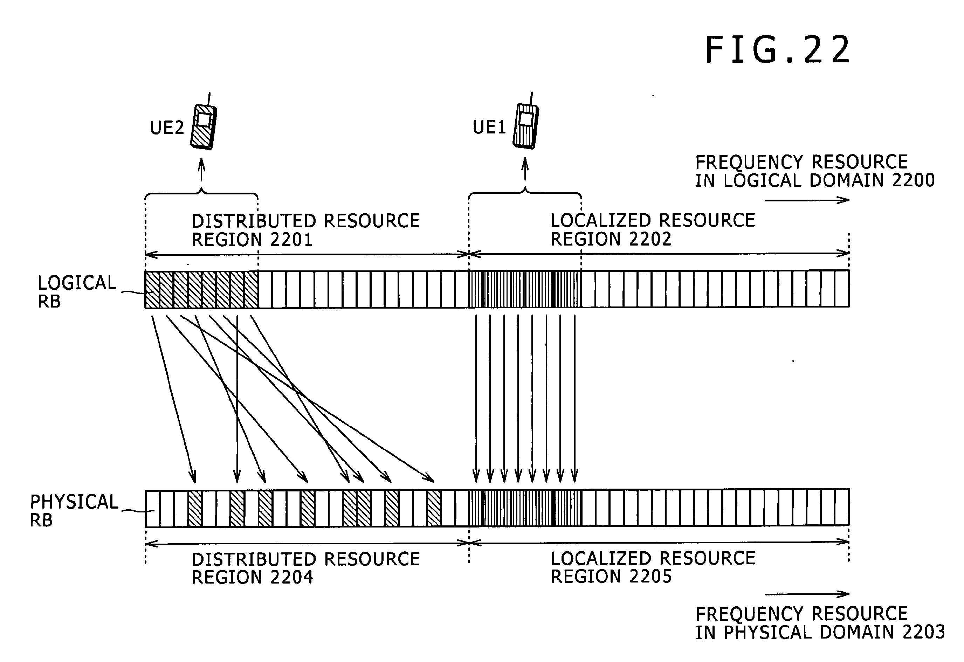

Fig. 22 illustrates an example of the result of RB assignment performed at the BS eNB1 in Fig. 9 in the present embodiment. In Fig. 22, among frequency resources 2200 in the logical domain, logical RBs from the localized resource region 2202 are assigned to the MS UE1 because the MS UE1 belongs to the cell-center area and logical RBs from the distributed resource region 2201 are assigned to the MS UE2 because the MS UE2 belongs to the cell-edge area. The logical RBs assigned to the MS UE1 are mapped without being permulated onto continuous physical RBs in the localized resource region 2205 of frequency resources 2203 in the physical domain. The logical RBs assigned to the MS UE2 are permulated and mapped onto distributed physical RBs in the distributed resource region 2204.

### Fifth Embodiment

The following describes a fifth embodiment to which the present invention is applied. In the fifth embodiment, frequency hopping of RBs assigned to cell-edge MSs is carried out in order to disperse interference by adjusting the interference power from an MS communicating with a neighbor BS experienced by the cell-edge MSs in uplinks by appropriate RB assignments, and moreover, to disperse interference affecting the neighbor BS in the frequency domain.

The following description assumes that MSs are classified into the areas as in Fig. 9.

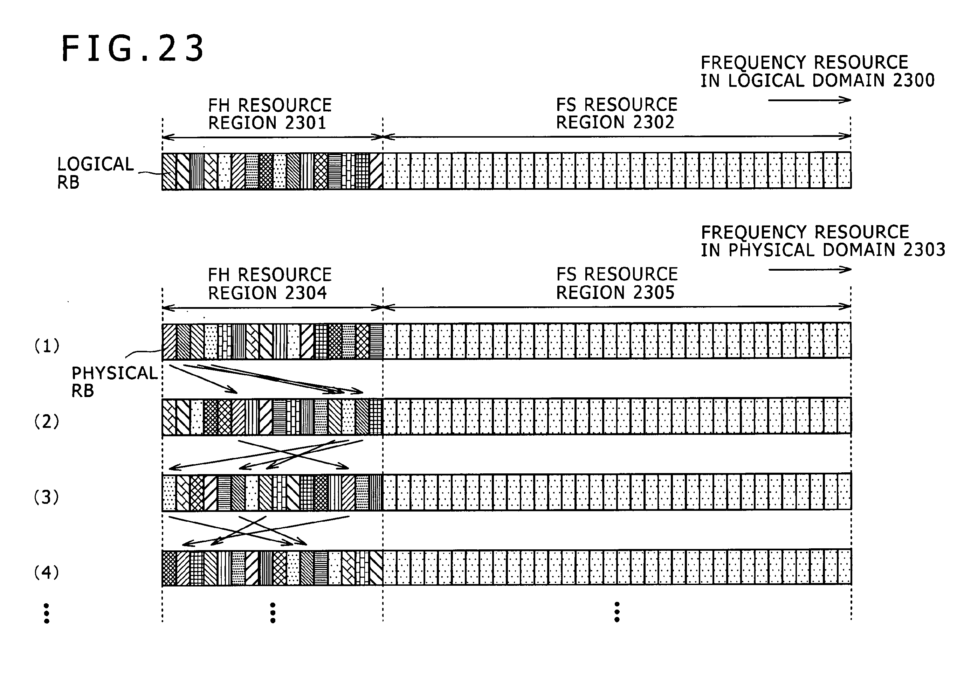

For uplink transmission, continuous logical RBs are assigned by Type 2 assignment. Assignment of RBs for which Frequency Hopping (FH) is applied and assignment of Frequency Selective (FS) RBs for which frequency hopping is not applied are explained, using Fig. 23. It is assumed that assignment of RBs of frequency resources 2300 in the logical domain is carried out and continuous logical RBs are assigned to each MS. First, BS divides frequency resources in the logical domain into an FH resource region 2301 and an FS resource region 2302. BS assigns continuous logical RBs in the FH resource region to an MS in the cell-edge area. The logical RBs in the FH resource region are mapped onto physical RBs in the FH resource region. Numbers (1), (2), ... in Fig. 23 denote units of time such as time slots or subframes in which frequency hopping is performed. The physical RBs in the FH resource region undergo frequency hopping within the region, depending on time. On the other hand, BS assigns continuous logical RBs from the FS resource region to an MS in the cell-center area. The logical RBs in the FS resource region are mapped onto physical RBs in the FS resource region. The physical RBs in the FS resource region do not undergo hopping. In the example of Fig. 23, a method of dividing frequency resources 2303 in the physical domain into the FH resource region 2304 and the FS resource region 2305 is common to that in the logical domain; however, the method of division not always must be common.

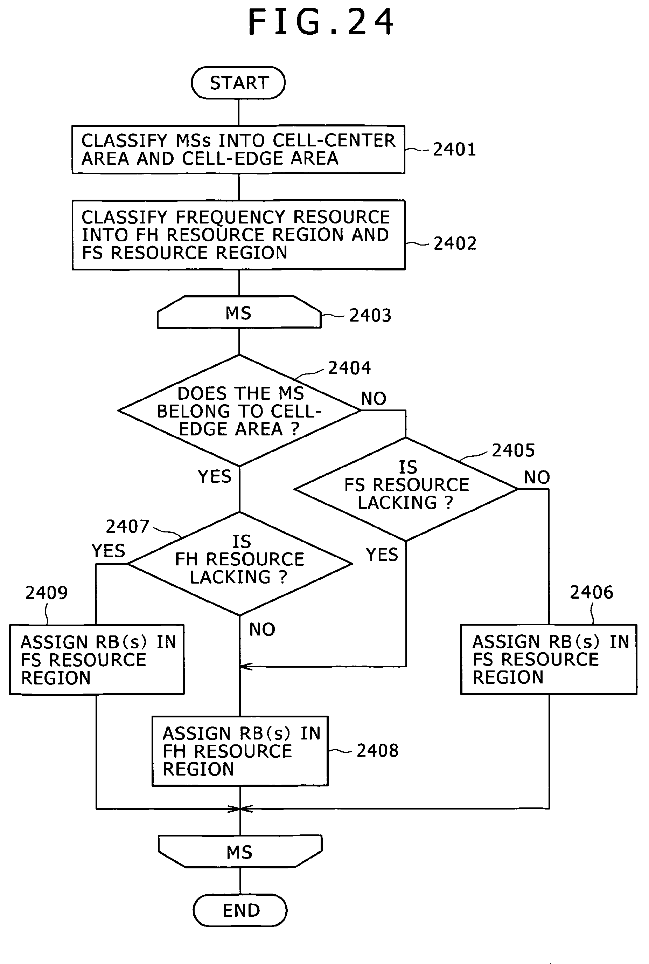

Fig. 24 illustrates an RB assignment procedure which is performed at BS in the present embodiment. First, BS classifies MSs communicating with the BS that executes RB assignment into the plural areas. In the example of Fig. 24, if RSRP signaled from an MS is equal to or more than a predetermined threshold value, BS judges that the distance from the BS to the MS is rather short and classifies the MS into the cell-center area; if the RSRP is less than the threshold value, BS judges that the distance from the BS to the MS is rather long and classifies the MS into the cell-edge area (2401). Then, BS divides frequency resources available in the system into the FH resource region and the FS resource region by the already stated method (2402). Then, BS performs logical RB assignment in the FH resource region or the FS resource region, according to the area in which each MS 2403 is located. If MS belongs to the cell-edge area (YES in 2404), BS judges that interference receiving from a neighbor BS is large and assigns logical RBs from the FH resource region to the MS by Type 2 assignment (2408). If RBs in the FH resource region are lacking, as they have already been assigned to other MSs, BS may assign logical RBs from the FS resource region (2409) as in Fig. 24. Alternatively, BS may assign no logical RB. If MS belongs to the cell-center area, BS judges that interference receiving from a neighbor BS is small and assigns logical RBs from the FS resource region to the MS (2406). If RBs in the FS resource region are lacking, as they have already been assigned to other MSs (YES in 2405), BS may assign logical RBs from the FH resource region (2408) as in Fig. 24 or may assign no logical RB. In a case where frequency resources are lacking in either of the resource regions, it is also possible to assign logical RBs across the two resource regions, as long as continuous logical RBs are assigned.

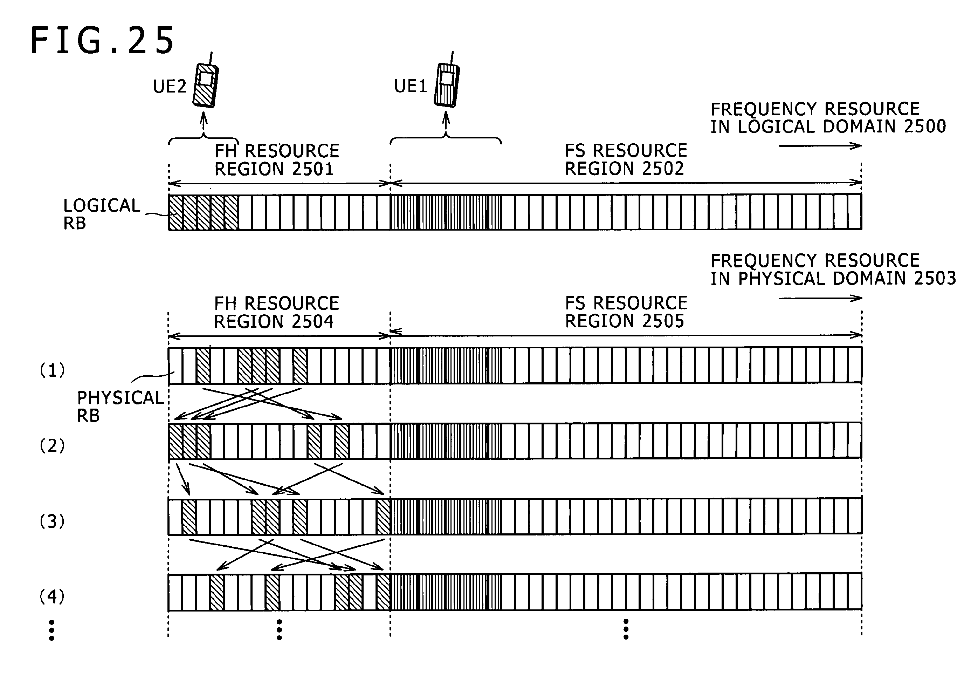

Fig. 25 illustrates an example of the result of RB assignment performed at the BS eNB1 in Fig. 9 in the present embodiment. In Fig. 25, among frequency resources 2500 in the logical domain, logical RBs from the FS resource region 2502 are assigned to the MS UE1 because the MS UE1 belongs to the cell-center area and logical RBs from the FH resource region 2501 are assigned to the MS UE2 because the MS UE2 belongs to the cell-edge area. The logical RBs assigned to the MS UE1 do not undergo frequency hopping and they are mapped onto continuous physical RBs in the FS resource region 2505 of frequency resources 2503 in the physical domain. The logical RBs assigned to the MS UE2 are mapped onto physical RBs to undergo frequency hopping in the FH resource region 2504.

### Sixth Embodiment

The following describes a sixth embodiment to which the present invention is applied. In the sixth embodiment, RBs in the distributed resource region making it easy to stabilize communication equality are assigned to cell-edge MSs in order to stabilize the communication equality of cell-edge MSs in uplinks.

The following description assumes that MSs are classified into the areas as in Fig. 9.

For uplink transmission, continuous RBs are assigned by Type 2 assignment. Assignment of distributed RBs and assignment of localized RBs in the present embodiment are carried out as illustrated in Fig. 20 in the same way as for the fourth embodiment. First, BS divides frequency resources in the logical domain into the distributed resource region and the localized resource region. BS assigns continuous logical RBs in the distributed resource region to an MS in the cell-edge area, permulates the logical RBs, and maps them onto distributed physical RBs. On the other hand, BS assigns continuous logical RBs in the localized resource region to an MS in the cell-center area and maps the logical RBs onto continuous physical RBs without permulating them. In the example of Fig. 20, the method of dividing resources into the distributed resource region and the localized resource region in the physical domain is common to that in the logical domain; however, the method of division not always must be common.

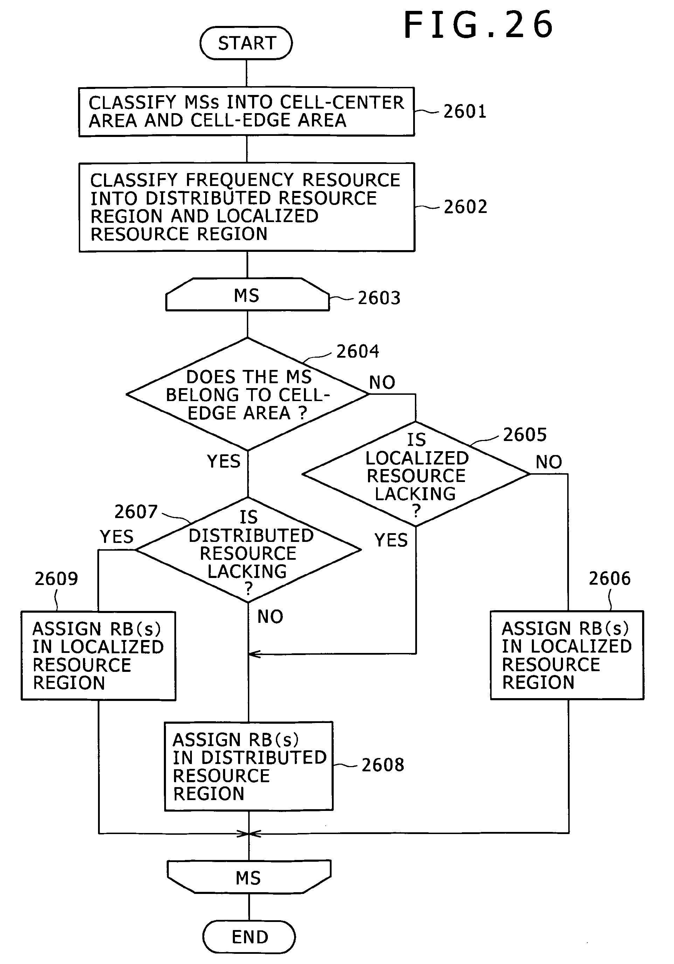

Fig. 26 illustrates an RB assignment procedure which is performed at BS in the present embodiment. First, BS classifies MSs communicating with the BS that executes RB assignment into the plural areas. In the example of Fig. 26, if RSRP signaled from an MS is equal to or more than a predetermined threshold value, BS judges that the distance from the BS to the MS is rather short and classifies the MS into the cell-center area; if the RSRP is less than the threshold value, BS judges that the distance from the BS to the MS is rather long and classifies the MS into the cell-edge area (2601). Then, BS divides frequency resources available in the system into the distributed resource region and the localized resource region by the already stated method (2602). Then, BS performs logical RB assignment in the distributed resource region or the localized resource region, according to the area in which each MS 2603 is located. If MS belongs to the cell-edge area (YES in 2604), BS judges that interference receiving from a neighbor BS is large and assigns logical RBs from the distributed resource region to the MS by Type 2 assignment (2608). If RBs in the distributed resource region are lacking, as they have already been assigned to other MSs, BS may assign logical RBs from the localized resource region (2609) as in Fig. 26. Alternatively, BS may assign no logical RB. If MS belongs to the cell-center area, BS judges that interference receiving from a neighbor BS is small and assigns logical RBs from the localized resource region to the MS (2606). If RBs in the localized resource region are lacking, as they have already been assigned to other MSs (YES in 2605), BS may assign logical RBs from the distributed resource region (2608) as in Fig. 26 or may assign no logical RB. In a case where frequency resources are lacking in either of the resource regions, it is also possible to assign logical RBs across the two resource regions, as long as continuous logical RBs are assigned.

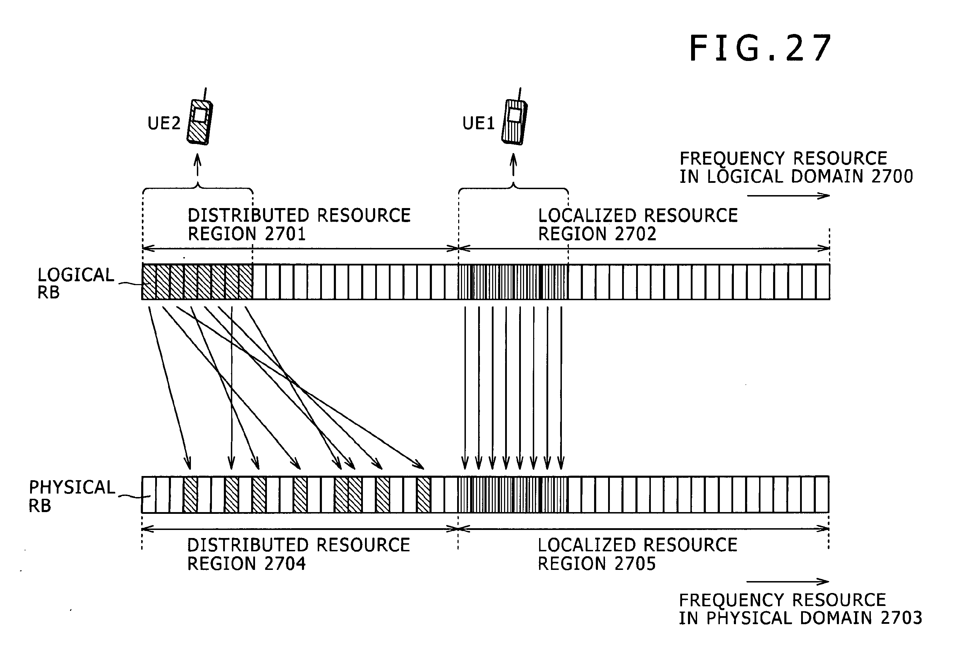

Fig. 27 illustrates an example of the result of RB assignment performed at the BS eNB1 in Fig. 9 in the present embodiment. In Fig. 27, among frequency resources 2700 in the logical domain, logical RBs from the localized resource region 2702 are assigned to the MS UE1 because the MS UE1 belongs to the cell-center area and logical RBs from the distributed resource region 2701 are assigned to the MS UE2 to stabilize communication quality because the MS UE2 belongs to the cell-edge area. The logical RBs assigned to the MS UE1 are mapped without being permulated onto continuous physical RBs in the localized resource region 2705. The logical RBs assigned to the MS UE2 are permulated and mapped onto distributed physical RBs in the distributed resource region 2704.

### Seventh Embodiment

The following describes a seventh embodiment to which the present invention is applied. In the seventh embodiment, frequency hopping of RBs assigned to cell-edge MSs is carried out in order to stabilize the communication equality of cell-edge MSs in uplinks.

The following description assumes that MSs are classified into the areas as in Fig. 9.

For uplink transmission, continuous logical RBs are assigned by Type 2 assignment. Assignment of RBs for which Frequency Hopping (FH) is applied and assignment of Frequency Selectivity (FS) RBs for which frequency hopping is not applied are carried out as illustrated in Fig. 23 in the same way as for the fifth embodiment. It is assumed that assignment of RBs is carried out in the logical domain and continuous logical RBs are assigned to each MS. First, BS divides frequency resources in the logical domain into the FH resource region and the FS resource region. BS assigns continuous logical RBs in the FH resource region to an MS in the cell-edge area. The logical RBs in the FH resource region are mapped onto physical RBs in the FH resource region. Numbers (1), (2), ... in Fig. 23 denote units of time such as a time slots or subframes in which frequency hopping is performed. The physical RBs in the FH resource region undergo frequency hopping within the region, depending on time. On the other hand, BS assigns continuous logical RBs from the FS resource region to an MS in the cell-center area. The logical RBs in the FS resource region are mapped onto physical RBs in the FS resource region. The physical RBs in the FS resource region do not undergo hopping. In the example of Fig. 23, the method of dividing resources into the FH resource region and the FS resource region in the physical domain is common to that in the logical domain; however, the method of division not always must be common.

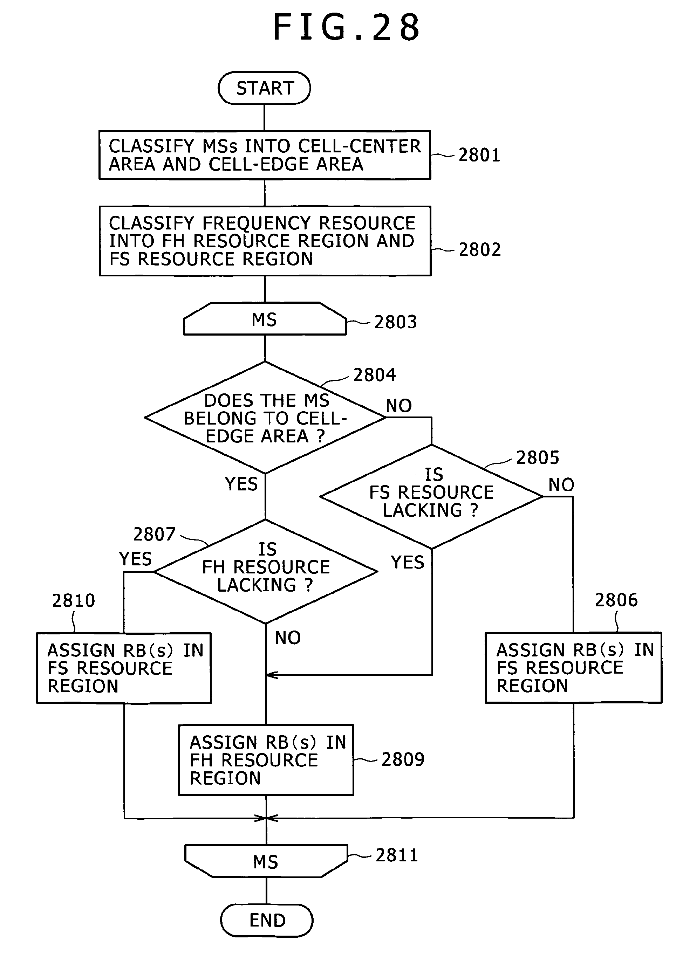

Fig. 28 illustrates an RB assignment procedure which is performed at BS in the present embodiment. First, BS classifies MSs communicating with the BS that executes RB assignment into the plural areas. In the example of Fig. 28, if RSRP signaled from an MS is equal to or more than a predetermined threshold value, BS judges that the distance from the BS to the MS is rather short and classifies the MS into the cell-center area; if the RSRP is less than the threshold value, BS judges that the distance from the BS to the MS is rather long and classifies the MS into the cell-edge area (2801). Then, BS divides frequency resources available in the system into the FH resource region and the FS resource region by the already stated method (2802). Then, BS performs logical RB assignment in the FH resource region or the FS resource region, according to the area in which each MS 2803 is located. If MS belongs to the cell-edge area (YES in 2804), BS judges that interference receiving from a neighbor BS is large and assigns logical RBs from the FH resource region to the MS by Type 2 assignment (2809). If RBs in the FH resource region are lacking, as they have already been assigned to other MSs, BS may assign logical RBs from the FS resource region (2810) as in Fig. 28. Alternatively, BS may assign no logical RB. If MS belongs to the cell-center area, BS judges that interference receiving from a neighbor BS is small and assigns logical RBs from the FS resource region to the MS (2806). If RBs in the FS resource region are lacking, as they have already been assigned to other MSs (YES in 2805), BS may assign logical RBs from the FH resource region (2809) as in Fig. 28 or may assign no logical RB. In a case where frequency resources are lacking in either of the resource regions, it is also possible to assign logical RBs across the two resource regions, as long as continuous logical RBs are assigned.

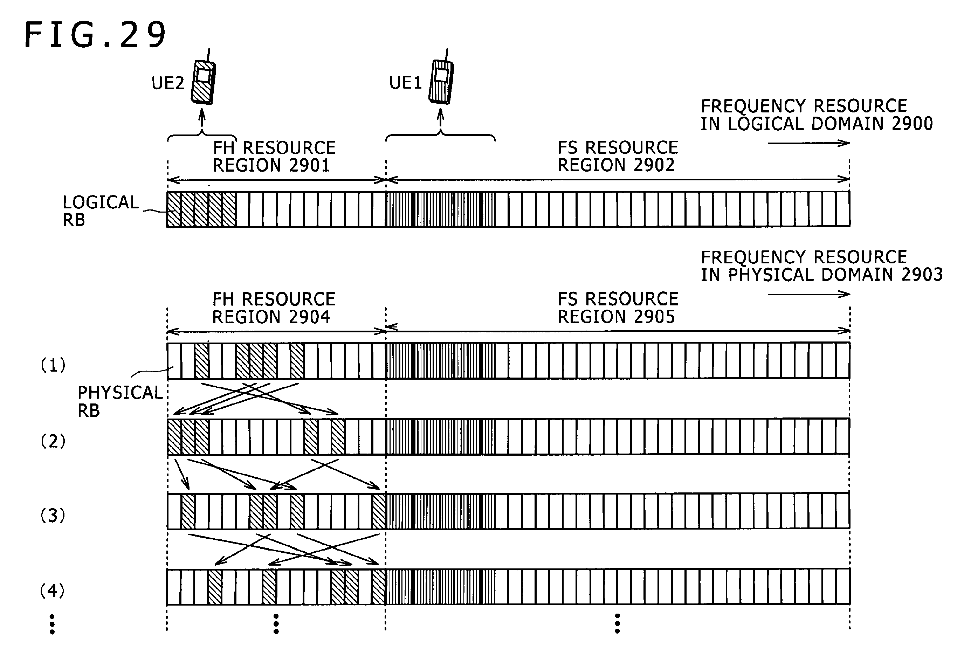

Fig. 29 illustrates an example of the result of RB assignment performed at the BS eNB1 in Fig. 9 in the present embodiment. In Fig. 29, logical RBs from the FS resource region 2902 are assigned to the MS UE1 because the MS UE1 belongs to the cell-center area and logical RBs from the FH resource region 2901 are assigned to the MS UE2 to stabilize communication quality because the MS UE2 belongs to the cell-edge area. The logical RBs assigned to the MS UE1 do not undergo frequency hopping and they are mapped onto continuous physical RBs in the FS resource region 2905. The logical RBs assigned to the MS UE2 are mapped onto physical RBs to undergo frequency hopping in the FH resource region 2904.

In the fourth to seventh embodiments, adjacent BSs should use distributed resource regions or FH resource regions occupying different positions in the frequency band to avoid that cell-edge MSs in the adjacent cells of the BSs use a same frequency. Furthermore, this makes it possible to reduce the effect of interference.

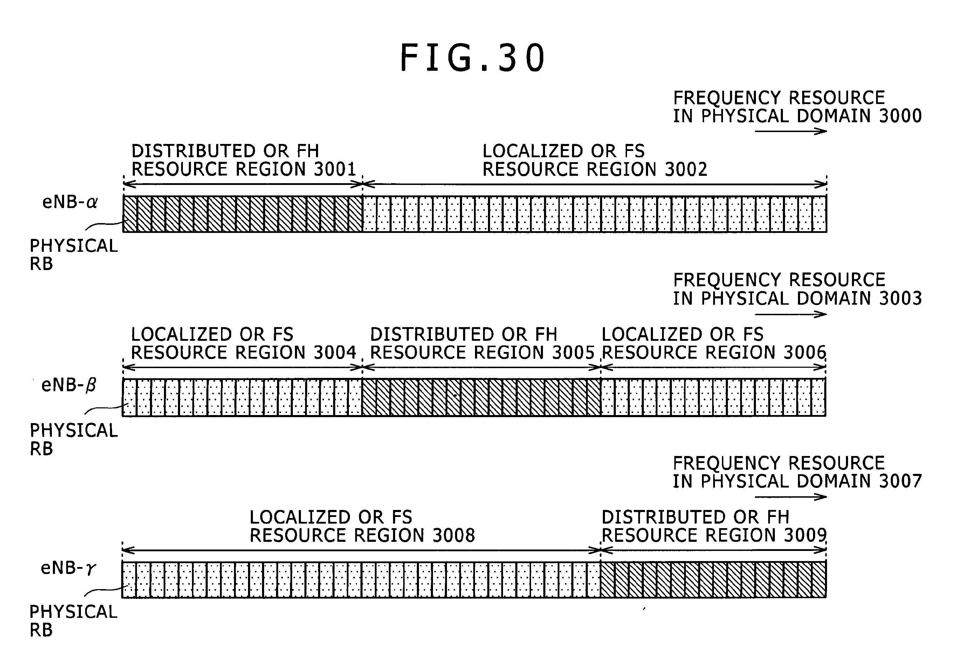

To realize this, for example, BS groups eNB-α, eNB-β, and eNB-γ, as shown in Fig. 16, are configured in advance to use distributed resource regions or FH resource regions occupying different positions in the frequency band, when designing cells. Specifically, as is illustrated in Fig. 30, distributed resource regions or FH resource regions 3001, 3005, 3009 which are to be used by BS groups eNB-α, eNB-β, and eNB-γ, respectively, are deployed in different positions in the frequency band. BS groups may be determined to be grouped into patterns as shown in Fig. 16, when designing cells, may be determined according to physical cell IDs that are specific to BSs, or may be determined randomly. Additionally, BS may dynamically change the position of the distributed resource region or FH resource region in the frequency band by reference to information such as HII signaled from its surrounding BSs.

The fourth to seventh embodiments have illustrated a method in which the distributed resource region or FH resource region is defined beforehand and RBs from this region is assigned to an MS. However, in the method in which RBs in the region having a given amount of resources are reserved beforehand for a specific MS group in this way, it may occur that reserved resources become lacking.

RBs in a resource region suitable for an MS are lacking, RBs from another resource region may be assigned to the MS, as already noted in the fourth to seventh embodiments.

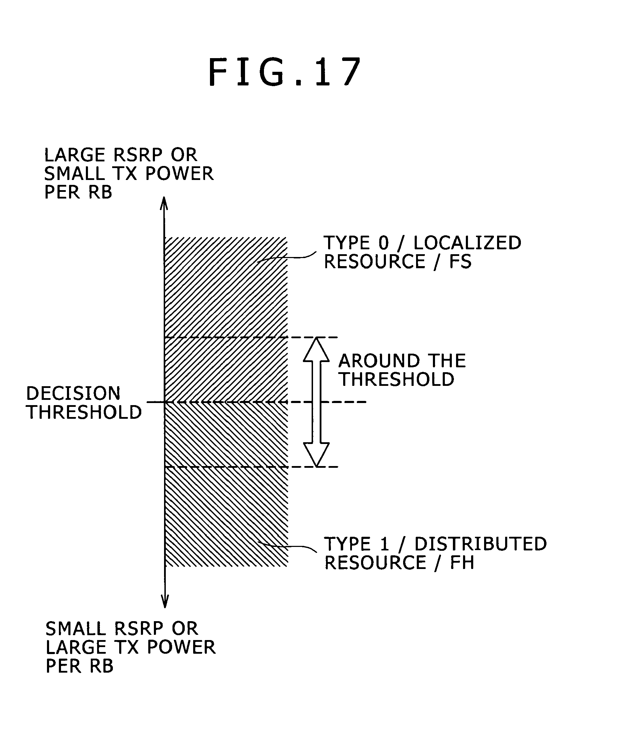

Alternatively, BS may assign resources from any resource region to an MS that falls within a range around the threshold, when classifying MSs, and BS preferentially assigns RBs from a resource region including more unoccupied RBs. Here, an MS that falls within a range around the threshold, as illustrated in Fig. 17, refers to the MS for which RSRP is close to the threshold for deciding either the cell-edge area or the cell-center area in which the MS is located in the fourth to seventh embodiments. As for decision of whether each MS falls within a range around the threshold, the range may be defined beforehand. If RBs in one resource region becomes lacking, RBs in a resource region including more unoccupied RBs may be assigned to MSs in descending order of closeness to the threshold.

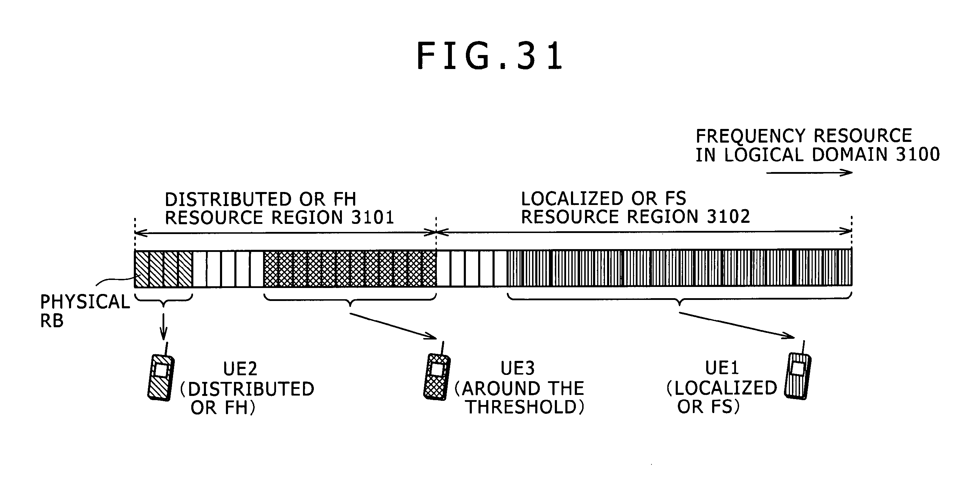

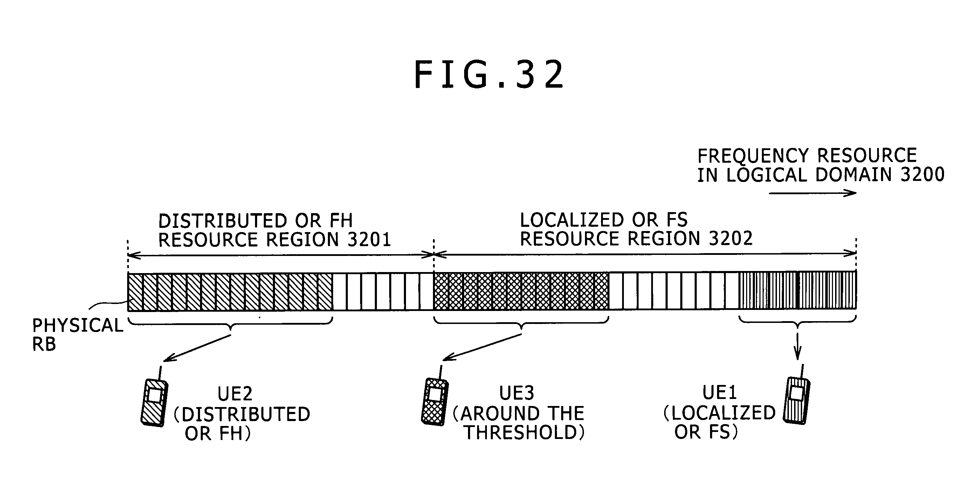

A method in which RBs in any resource region are assigned to MS falling within a range around the threshold is explained, using Figs. 31 and 32. In the following, it is assumed that RBs in the localized resource region or FS resource region 3102 are assigned to the MS UE1 in the cell-center area and RBs in the distributed resource region or FH resource region 3101 are assigned to the MS UE2 in the cell-edge area. MS UE3 is assumed to fall in the range around the threshold. Fig. 31 illustrates an example of RB assignment in a case where RBs in the localized resource region or FS resource region 3102 are lacking. The MS UE3 is assigned RBs from the distributed resource region 3101 having ample resources. On the other hand, Fig. 32 illustrates an example of RB assignment in a case where RBs in the distributed resource region or FH resource region 3201 are lacking. The MS UE3 is assigned RBs from the localized resource region 3202 having ample resources.

Alternatively, BS may dynamically divide resources into the resource regions, according to the aggregate traffic of MSs that use each resource region. After classifying MSs into the cell-edge area and the cell-center area, BS divides the resources into the distributed resource region and localized resource region or the FH resource region and FS resource region, according to the number of MSs and in each area and the aggregate traffic of the MSs. However, in the case that BS dynamically divides the resources into the resource regions, BS needs to signal a change of the resource regions to the MSs. For example, BS can broadcast change information to all MSs communicating the BS by transmitting such information via a physical channel called a PBCH (Physical Broadcast Channel).

By the method as described above, it is possible to avoid a lack of reserved frequency resources and flexibly respond to a change in the required amount of resources due to varying traffic of an MS group that uses each resource region.

In the wireless communication system in the first to seventh embodiments, even if a neighbor BS uses another communication scheme, it is possible to suppress interference resulting from radio waves transmitted by the neighbor BS and experienced by MSs. In other words, the wireless communication system in the first to seventh embodiments can be implemented even under environment where plural BSs use plural different communication schemes.

According to the present invention, the use efficiency of radio resources can be improved by carrying out radio resource assignments following variations in traffic and radio resource usage, not only in a long period, but also in a short period.

## Claims

1. A wireless communication system comprising a plurality of mobile stations (MSs) and a plurality of base stations (BSs) communicating by an OFDMA or SCFDMA scheme,
each of the BSs including:
a position determination unit that determines positions in which the MSs are located in the BS's cell and a power strength decision unit that decides strength of received power at which each of the MSs located in the BS's cell receives data;
a frequency assignment control unit that determines frequency resources to be assigned to the MSs located in the BS's cell, based on the positions of the MSs located in the BS's cell or the strength of the received power;
wherein, by the frequency assignment control unit, as frequency resources to be used for data transmission to the MSs located in the BS's cell, the assignment of frequency resource block groups comprising a given number of continuous frequency resource blocks in a frequency direction, wherein the frequency resource blocks are assignment units of frequency resources, each block having a fixed frequency width, to a first MS located in the cell center is performed, and the assignment of first frequency resource block groups comprising a plurality of frequency resource blocks included in a frequency resource block group subset comprising a plurality of nonadjacent frequency resource block groups repeated at fixed intervals in the frequency direction to a second MS located in the cell edge is performed; and
a unit for signaling resources for data transmission that signals the assigned frequency resources to be used for the data transmission to the MSs located in the BS's cell.

2. The wireless communication system according to Claim 1, wherein:
the BSs are grouped into a plurality of BS groups,
when the assignment of the first frequency resource block groups is performed, a BS belonging to the same BS group performs the assignment of the first frequency resource block groups included in the same frequency resource block group subset and the frequency resource block group subset differs from one another for each of the BS groups.

3. The wireless communication system according to Claim 1, wherein each of the BSs performs:
the assignment of the first frequency resource block groups to the first MS, if the frequency resource block groups are lacking; and
the assignment of the frequency resource block groups to the second MS, if the first frequency resource block groups are lacking.

4. The wireless communication system according to Claim 1, wherein each of the BSs performs:
the assignment of either the frequency resource block groups or the first frequency resource block groups to a third MS located at a border between the cell edge and the cell center.

5. A wireless communication system comprising a plurality of mobile stations (MSs) and a plurality of base stations (BSs) communicating by an OFDMA or SCFDMA scheme,
each of the BSs including:
a position determination unit that determines positions in which the MSs are located in the BS's cell and a power strength decision unit that decides strength of received power at which each of the MSs located in the BS's cell receives data;
a frequency assignment control unit that determines frequency resources to be assigned to the MSs located in the BS's cell, based on the positions of the MSs located in the BS's cell or the strength of the received power;
wherein, by the frequency assignment control unit, as frequency resources to be used by the MSs located in the BS's cell for data transmission to the BS with which each MS communicates, the assignment of first resource block groups including continuous frequency resource blocks in the frequency direction, wherein the frequency resource blocks are assignment units of frequency resources, each block having a fixed frequency width, to a first MS located in the cell center is performed, and the assignment of second resource block groups, each group consisting of a set of frequency resource blocks including a frequency resource block including a frequency resource with a lowest frequency to be assigned, a frequency resource block including a frequency resource with a highest frequency to be assigned, and at least one frequency resource block not to be assigned between these two frequency resource blocks, to a second MS located in the cell edge is performed; and
a unit for signaling resources for data transmission that signals the assigned frequency resources to be used for the data transmission to the MSs located in the BS's cell.

6. The wireless communication system according to Claim 5, wherein each of the BSs dynamically changes allocations of a first frequency region from which the first resource block groups are assigned and a second frequency region from which the second resource block groups are assigned and signals information about the allocations to the MSs located in the BS's cell.

7. The wireless communication system according to Claim 5, wherein:
the BSs are grouped into a plurality of BS groups,
when the assignment of the second resource block groups is performed, a BS belonging to the same BS group performs the assignment of the second resource block groups to be included in a same frequency band and the second frequency resource block groups differ from one another for each of the BS groups.

8. The wireless communication system according to Claim 5, wherein each of the BSs performs:
the assignment of either the first resource block groups or the second resource block groups to a third MS located at a border between the cell edge of the BS and the cell center of the BS.

9. The wireless communication system according to Claim 5, wherein each of the BSs performs:
the assignment of the second resource block groups to the first MS, if the first resource block groups are lacking; and
the assignment of the first resource block groups to the second MS, if the second resource block groups are lacking.

10. A wireless communication system comprising a plurality of mobile stations (MSs) and a plurality of base stations (BSs) communicating by an OFDMA or SCFDMA scheme,
each of the BSs including:
a position determination unit that determines positions in which the MSs are located in the BS's cell and a power strength decision unit that decides strength of received power at which each of the MSs located in the BS's cell receives data;
a frequency assignment control unit that determines frequency resources to be assigned to the MSs located in the BS's cell, based on the positions of the MSs located in the BS's cell or the strength of the received power;
wherein, by the frequency assignment control unit, as frequency resources to be used by the MSs located in the BS's cell for data transmission to the BS with which each MS communicates, the assignment of resources not to undergo frequency hopping to a first MS located in the cell center of the BS is performed, and the assignment of resources to undergo frequency hopping to a second MS located in the cell edge of the BS is performed; and
a unit for signaling resources for data transmission that signals the assigned frequency resources to be used for the data transmission from the BS to the MSs located in the BS's cell.

11. The wireless communication system according to Claim 10, wherein each of the BSs performs:
the assignment of the resources to undergo frequency hopping to the first MS, if the resources not to undergo frequency hopping are lacking; and
the assignment of the resources not to undergo frequency hopping to the second MS, if the resources to undergo frequency hopping are lacking.

12. The wireless communication system according to Claim 10,
wherein:
the BSs are grouped into a plurality of BS groups,
when the assignment of the resources to undergo frequency hopping is performed, a BS belonging to the same BS group performs the assignment of the resources to undergo frequency hopping in a same frequency region and the same frequency region differs from one another for each of the BS groups.

13. The wireless communication system according to Claim 10, wherein each of the BSs performs:
the assignment of either the resources not to undergo frequency hopping or the resources to undergo frequency hopping to a third MS located at a border between the cell edge of the BS and the cell center of the BS.

14. The wireless communication system according to Claim 10, wherein each of the BSs dynamically changes allocations of a first frequency region from which the resources not to undergo frequency hopping are assigned and a second frequency region from which the resources to undergo frequency hopping are assigned and signals information about the allocations to the MSs located in the BS's cell.

15. A wireless communication node communicating with a plurality of mobile stations (MSs) by an OFDMA or SCFDMA scheme, comprising:
a position determination unit that determines positions in which the MSs are located in the node's cell and a power strength decision unit that decides strength of received power at which each of the MSs located in the node's cell receives data;
a frequency assignment control unit that determines frequency resources to be assigned to the MSs located in the node's cell, based on the positions of the MSs located in the node's cell or the strength of the received power;
wherein, by the frequency assignment control unit, as frequency resources to be used for data transmission to the MSs located in the node's cell, the assignment of frequency resource block groups including a given number of continuous frequency resource blocks in the frequency direction, wherein the frequency resource blocks are assignment units of frequency resources, each block having a fixed frequency width, to a first MS located in the cell center is performed, and the assignment of first frequency resource block groups including a plurality of frequency resource blocks included in a frequency resource block group subset including a plurality of nonadjacent frequency resource block groups repeated at fixed intervals in the frequency direction to a second MS located in the cell edge is performed; and
a unit for signaling resources for data transmission that signals the assigned frequency resources to be used for the data transmission to the MSs located in the node's cell.

16. A wireless communication node communicating with a plurality of mobile stations (MSs) by an OFDMA or SCFDMA scheme, comprising:
a position determination unit that determines positions in which the MSs are located in the node's cell and a power strength decision unit that decides strength of received power at which each of the MSs located in the node's cell receives data;
a frequency assignment control unit that determines frequency resources to be assigned to the MSs located in the node's cell, based on the positions of the MSs located in the node's cell or the strength of the received power;
wherein, by the frequency assignment control unit, as frequency resources to be used for data reception from the MSs located in the node's cell, the assignment of first resource block groups including continuous frequency resource blocks in the frequency direction, wherein the frequency resource blocks are assignment units of frequency resources, each block having a fixed frequency width, to a first MS located in the cell center is performed, and the assignment of second resource block groups, each group consisting of a set of frequency resource blocks including a frequency resource block including a frequency resource with a lowest frequency to be assigned, a frequency resource block including a frequency resource with a highest frequency to be assigned, and at least one frequency resource block not to be assigned between these two frequency resource blocks to a second MS located in the cell edge is performed; and
a unit for signaling resources for data transmission that signals the assigned frequency resources to be used for the data transmission from the MSs to the MSs located in the node's cell.

17. A wireless communication node communicating with a plurality of mobile stations (MSs) by an OFDMA or SCFDMA scheme, comprising:
a position determination unit that determines positions in which the MSs are located in the node's cell and a power strength decision unit that decides strength of received power at which each of the MSs located in the node's cell receives data;
a frequency assignment control unit that determines frequency resources to be assigned to the MSs located in the node's cell, based on the positions of the MSs located in the node's cell or the strength of the received power;
wherein, by the frequency assignment control unit, as frequency resources to be used for data reception from the MSs located in the node's cell, the assignment of resources not to undergo frequency hopping to a first MS located in the cell center is performed, and the assignment of resources to undergo frequency hopping to a second MS located in the cell edge is performed; and
a unit for signaling resources for data transmission that signals the assigned frequency resources to be used for the data transmission from the MSs to the MSs located in the node's cell.

18. A radio mobile station (MS) node communicating with a base station (MS) by an OFDMA or SCFDMA scheme, comprising:
a power strength decision unit that decides strength of received power of a signal the MS node receives from the BS;
a received power signaling unit that signals the strength to the BS; and
a data reception unit that performs data reception from the BS, using resources assigned by the BS, based on the strength,
wherein the data reception unit performs the data reception, using frequency resource block groups including a given number of continuous frequency resource blocks in the frequency direction, wherein the frequency resource blocks are assignment units of frequency resources, each block having a fixed frequency width, if the strength is equal to or more than a predetermined threshold value, and performs the data reception, using first frequency resource block groups including a plurality of frequency resource blocks included in a frequency resource block group subset including a plurality of nonadjacent frequency resource block groups repeated at fixed intervals in the frequency direction, if the strength is less than the predetermined threshold value.

19. The wireless communication system according to Claim 1,
wherein the position determination unit stores an MS for which the strength of the received power is equal to or more than a predetermined threshold value among the MSs located in the BS's cell as the first MS and stores an MS for which the strength of the received power is less than the predetermined threshold value among the MSs located in the BS's cell as the second MS.

20. The wireless communication node according to Claim 15,
wherein the position determination unit stores an MS for which the strength of the received power is equal to or more than a predetermined threshold value among the MSs located in the node's cell as the first MS and stores an MS for which the strength of the received power is less than the predetermined threshold value among the MSs located in the node's cell as the second MS.
